# EUROPEAN PATENT APPLICATION

(11) **EP 4 708 013 A1**
(43) Date of publication of application: **11.03.2026**
(21) Application number: 25198314.4
(22) Date of filing: 27.08.2025
(51) Int. Cl.: G06F 3/0488, G06F 3/04883

(54) **REFINE MODE IN A TABLET COMPUTING DEVICE**

(30) Priority: 04.09.2024 US 202418823761
(71) Applicant: reMarkable AS, 0369 Oslo (NO)
(72) Inventor: BONO LÓPEZ, Maria, 0661 Oslo (NO); FORNO RIOS, Caterina, 0369 Oslo (NO); SURÉN, Stian, 1410 Kolbotn (NO)
(74) Representative: AWA Sweden AB

(57) **Abstract**

Embodiments of the invention provide a computerized system and method in an e-paper tablet device that provides uses with two modes for interacting with the e-paper tablet device. In a Creative Mode, users may enter text, make annotations, drawings and take other creative actions. In a Refine Mode, the user may make edits to text, annotations, and drawings, and make other refinements to the actions they have taken in the Creative Mode. The hardware and software of the e-paper tablet support these two modes, including a special hardware key on a keyboard associated with the e-paper tablet that enables users to switch between the two modes. As such embodiments of the invention enable users to work closely with texts, editing and commenting on them using a stylus device (or even an input mechanism like a finger) while maintaining integrity with the underlying text and its display.

## Description

### TECHNICAL FIELD

The disclosure relates generally to hybrid graphical and textual editing in devices adapted to receive graphical and text inputs from multiple sources, such as keyboard and a pen-stylus. In particular, embodiments of the present invention enable users of tablet devices to switch from creative input modes to editing or refinement modes on their tablet devices to perform various alterations to documents shown on the tablet devices.

### BACKGROUND

Many tablet computers, some mobile telephones and some PCs are equipped with both keyboards and touch- or pen-stylus input systems. One class of tablet computers, electronic paper tablets, typically include both keyboards and some form of stylus. Interactive displays on these devices combine a display screen, such as an LCD, oLED, plasma or electrophoretic display (EPD), with their input system. The input system recognizes the presence of an input object such as a pen-stylus touching or in close proximity to the display screen, which may produce new lines or drawings for display on the devices.

Multiple input devices enhance the capabilities of these electronic devices for users. A user may, for example, concurrently add text and drawings (e.g., annotations) to a document. Text characters may be generated responsive to a user interacting with an alphanumeric input device (e.g., a keyboard and/or touch screen keyboard) and may be used to update text documents and/or create new text documents. Example annotations include sketches, drawings, markings, and scribbles that correspond to a gesture made by a user (e.g., using an input mechanism). A user may even collaborate with others in developing a document.

Similarly, a user may read a text on the screen of an electronic paper tablet and use an input device, such as a pen-stylus to make marginal notes and other annotations (e.g., edits) to the text. Tablet devices may generate annotations responsive to a user providing free form gestures (e.g., to a touch screen) in proximity to display text.

Collectively, all these behaviors in an electronic paper tablet render the device much more like conventional paper, which some users find to be a tremendous advantage. Of course, providing such a variety of input options to users in an electronic device complicates their use. While such devices may offer greater flexibility than a conventional pen and paper (e.g., adding a drawing in the middle of a text without having to erase and rewrite the text), the controls for making such alterations may not be immediately accessible. Similarly, many users may not tolerate long training periods in how to user their device. Thus, the controls should be readily accessible to users.

While great strides have been made in recent years in improving the useability of tablet devices, further improvements are still warranted. Moreover, specific use cases for working with annotations on such devices seemingly compels additional functionality not available in conventional devices.

### SUMMARY OF THE INVENTION

Embodiments of the invention provide a computerized annotation system that comprises a computer memory and a display screen that displays a document having text characters, wherein the text characters have an underlying document representation stored in the computer memory such that each text character in the document has a unique identifier. The computerized annotation system may also include an input detector module that receives a first annotation to the document displayed on the display screen, wherein the first annotation comprises graphic data produced by interaction between the display screen and an input mechanism, wherein the input detector module initiates an update to the display screen to show both the document and the first annotation. The computerized annotation system may also include a refine module that determines whether the computerized annotation system is in one of a creative mode or a refine mode, wherein if the computerized annotation system is in the creative mode then the refine module initiates storage in the computer memory of an update to the document that includes the first annotation and if the computerized annotation system is in the refine mode then the refine module initiates a refinement to the document.

Embodiments of the invention also provide a method, e.g., a method for being carried out at least in part by a computerized annotation system, where the method comprises retrieving a document having text characters from a computer memory for display on a display screen of the computerized annotation system, wherein the text characters have an underlying document representation stored in the computer memory such that each text character in the document has a unique identifier. The method may further comprise receiving a first annotation to the document displayed on the display screen, wherein the first annotation comprises graphic data produced by interaction between the display screen and an input mechanism. The method may further comprise updating the display screen to show both the document and the first annotation. The method may further comprise determining if the computerized annotation system is in one of a creative mode or a refine mode. If the computerized annotation system is determined to be in a creative mode then the first annotation may be stored in the computer memory, altering the document. If the computerized annotation system is determined to be in a refinement mode, then a refinement may be initiated to the document. The method may be termed a computerized method.

### BRIEF DESCRIPTION OF DRAWINGS

The disclosed embodiments have advantages and features which will be more readily apparent from the detailed description, the appended claims, and the accompanying figures (or drawings). A brief introduction of the figures is provided below.
FIG. 1 illustrates a system architecture for an e-paper tablet device 110 that receives inputs from an input mechanism 120 as the user makes a gesture with the input mechanism 120.
FIG. 2 is a block diagram of the system architecture of an e-paper tablet device 110, comprising an input detector module 210, an input digitizer 220, a display system 230, and a graphics generator 240, according to an embodiment of the invention.
FIG. 3 illustrates a front and right perspective view of an e-paper tablet 300 having the functionality described for the e-paper tablet device 110 in FIGs. 1-2, according to an embodiment of the invention
FIG. 4 illustrates hardware components of an example Electrophoretic Display (EPD), according to an embodiment of the invention.
FIG. 5 illustrates a representative display stack 500 comprised of various display component layers associated with the contact-sensitive display on the e-paper tablet device 110, according to an embodiment of the invention.
FIG. 6 illustrates a block diagram illustrating components of an example machine able to read instructions from a machine-readable medium and execute them in a processor (or controller), according to an embodiment of the invention.
FIG. 7 illustrates a rear view of the e-paper tablet 300 showing volcano feet 701a-701d, a pogo pad 703, and an antenna region 705, according to an embodiment of the invention.
FIG. 8 illustrates a top view of the e-paper tablet device 300 showing volcano feet 701a, 701d, and a power button 801, according to an embodiment of the invention.
FIG. 9 illustrates a bottom view of the e-paper tablet device 300 showing volcano feet 701b, 701d and the USB-c connector 307, according to an embodiment of the invention.
FIG. 10 illustrates a right view of the e-paper tablet device 300 showing volcano feet 701b, 701a, and the charging area 304 for recharging the input device 120, when the input device is an active pen-stylus, according to an embodiment of the invention.
FIG. 11 illustrates a left view of the e-paper tablet device 300 showing volcano feet 701c, 701d, according to an embodiment of the invention.
FIG. 12 illustrates the e-paper tablet device 300 connected to a removable keyboard 1201 having a special key 1205, the e-paper tablet device 300 held in a folio 1203, according to an embodiment of the invention.
FIG. 13 illustrates an active pen-stylus 1300 that comprises a core member 1302 that itself comprises one or more antennas configured for communications with a tablet device, such as the e-paper tablet device 110, according to an embodiment of the invention.
FIG. 14 illustrates an external casing 1401 for a pen-stylus 1400 designed to fit a user's hand, according to an embodiment of the invention.
FIG. 15 illustrates an anchoring module that has provided a portion of text 1501 having a specific character (e.g., "A") with a numerical identifier (e.g., Anchoring ID "1234567890" 1503), according to an embodiment of the invention.
FIG. 16 illustrates an annotation "On" represented as a series of points, such as the point 1604, according to an embodiment of the invention.
FIG. 17 illustrates an annotation 1701 (e.g., a strikeout mark) using a bounding box 1703 anchored to a text character (e.g., "A") by the anchor module 270, according to an embodiment of the invention.
FIG. 18 illustrates a "bounding box free" embodiment applied to two annotations, 1805, 1809, according to an embodiment of the invention.
FIGS. 19A-19D illustrate the use of annotation anchoring by the anchor module 270 and the resulting impacts of anchoring on text displayed in a portion of an interface, such as a display screen, according to an embodiment of the invention.
FIG. 20 illustrates the display 2005 of the e-paper tablet device 110 having a connection to a keyboard 1201 and with the user having access to a pen-stylus 1400.
FIG. 21 illustrates the display 2005 of the e-paper tablet device 110 in a Refine Mode, according to an embodiment of the invention.
FIGs. 22-24 illustrate a series of actions that a user may take in the Refine Mode to select a section of text, handwritten notes, and drawings on the display 2005, according to an embodiment of the invention.
FIGs. 25-27 illustrate a series of actions that a user may take in the Refine Mode to select a section of text, handwritten notes, and drawings on the display 2005, according to another embodiment of the invention.
FIGs. 28-29 illustrate an embodiment of the Refine Mode used to edit a document on the display 2005, according to an embodiment of the invention.
FIGs. 30-31 illustrate application of the Refine Mode to create additional space in a document on the display 2005, according to an embodiment of the invention.
FIGs. 32-33 illustrate a sequence of steps that a user may employ to move and/or rearrange portions of a document shown on the display 2005, according to an embodiment of the invention.
FIGs. 34-35 illustrate a sequence of steps involving the Refine Mode that enable a user to edit a given document shown on a display 2005 by placing a caret in the text, according to an embodiment of the invention.
FIG. 36 illustrates additional gestures that a user may make with a pen-stylus 1400 in the Refine Mode to edit a document, according to an embodiment of the invention.

The figures depict various embodiments of the presented invention for purposes of illustration only. One skilled in the art will readily recognize from the following discussion that alternative embodiments of the structures and methods illustrated herein may be employed without departing from the principles described herein.

### DETAILED DESCRIPTION

The Figures (FIGS.) and the following description relate to preferred embodiments by way of illustration only. It should be noted that from the following discussion, alternative embodiments of the structures and methods disclosed herein will be readily recognized as viable alternatives that may be employed without departing from the principles of what is claimed.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. An ordinarily skilled artisan will readily recognize from the following description that alternative embodiments of the structures and methods illustrated herein may be employed without departing from the principles described herein.

### OVERVIEW

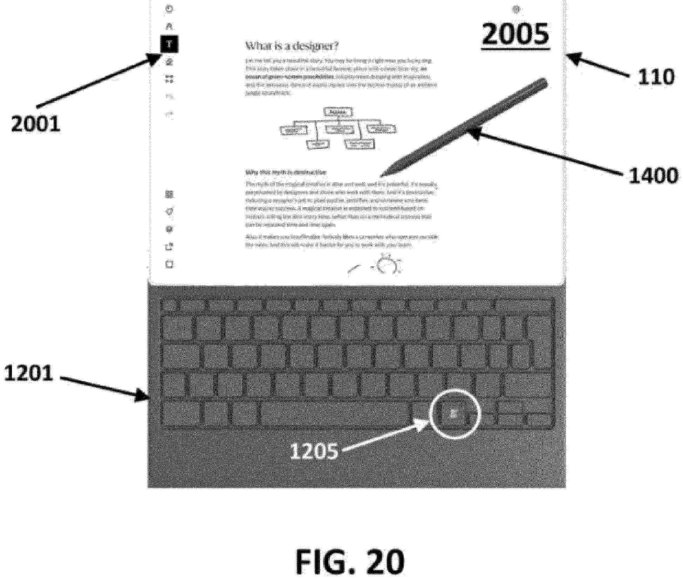

Disclosed is a system and related process) for assisting users make inputs to their tablet devices, particularly e-paper tablet devices, using a variety of input mechanisms, such a keyboard and a pen-stylus, as well as helping users navigate through various modes of using their tablet devices (e.g., inputting new information to a document and editing the document). Among other things, the operational controls provided are intended to be relatively intuitive for users and act as an aid to increasing their efficiency in using such tablet devices. A description of this specific invention begins at FIG. 20, following a description of related and associated hardware devices that enable embodiments of the invention. Thus, before describing the invention in greater detail, a description will be provided of the e-paper tablet, its related keyboard, its pen-stylus, and the interactions of these hardware components. Following this description, embodiments of the invention will be described.

### SYSTEM AND DEVICE CONFIGURATION FOR HOST TABLET DEVICE

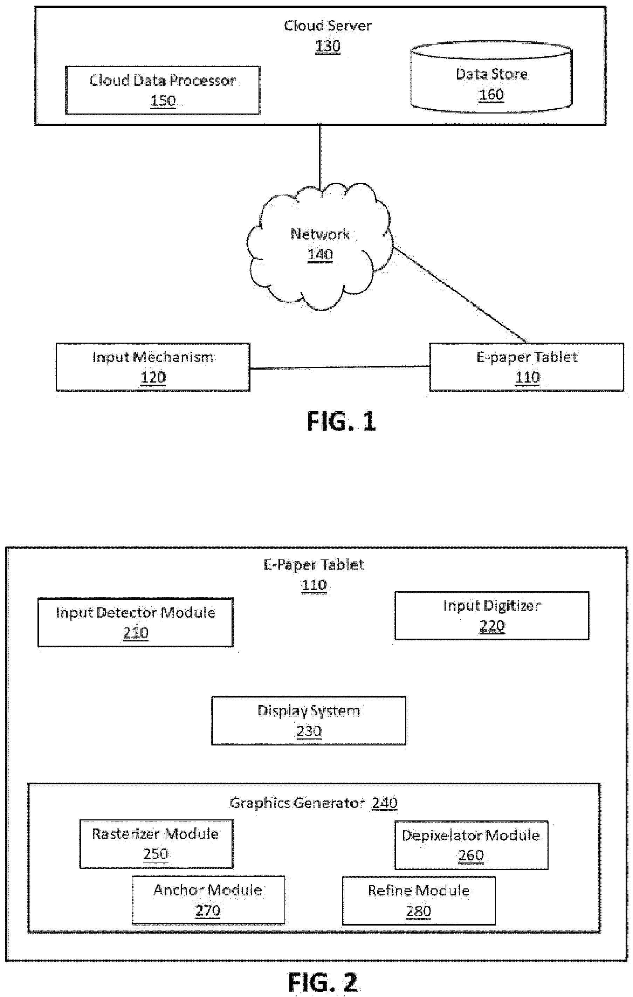

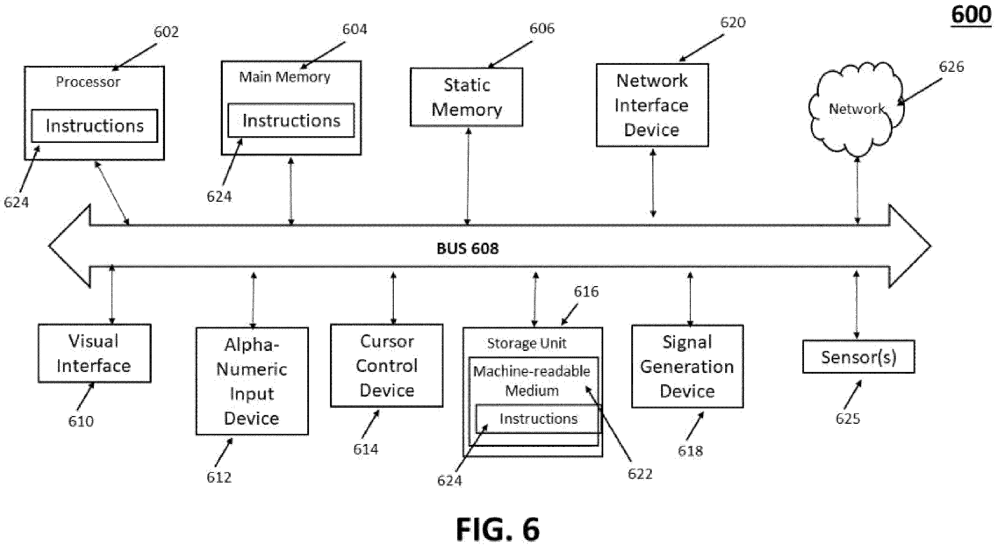

As shown in FIG. 1, an e-paper tablet device 110, which operates as a computerized annotation system, receives inputs from the input mechanism 120, for example, when the input mechanism 120 makes physical contact with a contact-sensitive surface (*e.g.,* the touch-sensitive screen) on the e-paper tablet device 110 as the user makes a gesture of some sort with the input mechanism 120. The input mechanism 120 may be a finger, pen-stylus or marker. The tablet device 110 here is referred to as an "e-paper tablet," a device that mimics the feeling of writing with ordinary pen and paper for users of the device. Such devices are also known as "electronic paper" and "electronic ink". Based on the nature of the contact, the e-paper tablet device 110 generates and executes instructions for updating content displayed on the contact-sensitive screen to reflect the gesture inputs. For example, in response to a gesture transcribing a verbal message (*e.g.,* a written text or a drawing), the e-paper tablet device 110 updates the contact-sensitive screen to display the transcribed message. As another example, in response to a gesture selecting a navigation option, the e-paper tablet device 110 updates the screen to display a new page associated with the navigation option. The e-paper tablet device 110 (which as discussed below performs as a computerized annotation system) may comprise a computer system configured to receive contact input (e.g., detect handwriting on a display screen, gestures (generally, gestures)) and process the gestures into instructions for updating the user interface (e.g., display screen) to provide, for display, a response corresponding to the gesture (e.g., show the resulting gesture) on the e-paper tablet device 110, and store such gestures in a computer memory (e.g., memory 604 shown in FIG. 6). One particular form of gesture described herein comprises "annotations" made by users to texts displayed on the e-paper tablet device 110. The e-paper tablet device 110 may also include a keyboard to enable typed input. While embodiments of the invention have been designed for e-paper systems, embodiments of the invention may also be suitable for other forms of computing devices capable of receiving and processing inputs from pen-stylus devices.

The input mechanism 120 may refer to any device or object that is compatible with the contact-sensitive screen of the e-paper tablet device 110, in particular a pen-stylus device, such as a so-called active pen device having its own power source or a static pen that receives its power from engagement with the contact-sensitive screen on the e-paper tablet device 110. In one embodiment, the input mechanism 120 may work with an electronic ink (*e.g.,* E-ink) contact-sensitive screen. For example, the input mechanism 120 may refer to any device or object that can interface with a screen and, from which, the screen can detect a touch or contact of said input mechanism 120. Once the touch or contact is detected, electronics associated with the screen generate a signal which the e-paper tablet device 110 can process as a gesture that may be provided for display on the screen. Upon detecting a gesture by the input mechanism 120, electronics within the contact-sensitive screen generate a signal that encodes instructions for displaying content or updating content previously displayed on the screen of the e-paper tablet device 110 based on the movement of the detected gesture across the screen. For example, when processed by the e-paper tablet device 110, the encoded signal may cause a representation of the detected gesture to be displayed on the screen of the e-paper tablet device 110, such as a scribble. As mentioned, the input mechanism 120 may be a pen-stylus or another type of pointing device, including a part of a user's body, such as a finger.

**In** one embodiment, the input mechanism 120 is an encased magnetic coil. When in proximity to the screen of the e-paper tablet device 110, the magnetic coil helps generate a magnetic field that encodes a signal that communicates instructions, which are processed by the e-paper tablet device 110 to provide a representation of the gesture for display on the screen, *e.g.,* as a marking. The input mechanism 120 may be force (e.g., pressure) and tilt-sensitive such that the system can make natural, visual response to both the pressure and tilt applied by the user. In turn, the interaction between the input mechanism and the contact-sensitive screen of the e-paper tablet device 110 may generate a different encoded signal for processing, for example, to provide for display a representation of the gesture on the screen that has different characteristics, *e.g.,* thicker line marking. In alternate embodiments, the input mechanism 120 includes a power source (*e.g.,* a battery) which can generate an electric field with a contact-sensitive surface. It is noted that the encoded signal is a signal that is generated and may be communicated. The encoded signal may have a signal pattern that may be used for further analog or digital analysis (or interpretation).

**In** one embodiment, the contact-sensitive screen is a capacitive touchscreen. The screen may be designed using a glass or polymer material coated with a conductive material. Electrodes, or an alternate current carrying electric component, are arranged along the coating of the screen (e.g., in a diamond-shaped cross hatch) to maintain a constant level of current running throughout the screen. A second set of electrodes are arranged horizontally. The matrix of vertical active electrodes and horizontal inactive electrodes generates an electrostatic field at each point on the screen. When an input mechanism 120 with conductive properties, for example the encased magnetic coil, a human finger, or something else that triggers the capacitive effect, is brought into contact with an area of the screen of the e-paper tablet device 110, current flows through the horizontally arranged electrodes, disrupting the electrostatic field at the contacted point on the screen. The disruption in the electrostatic field at each point that a gesture covers may be measured, for example as a change in capacitance, and encoded into an analog or digital signal.

**In** an alternate embodiment, the contact-sensitive screen is a resistive touchscreen. The resistive touch screen comprises two metallic layers: a first metallic layer in which striped electrodes are positioned on a substrate, such as a glass or plastic and a second metallic layer in which transparent electrodes are positioned. When contact from an input mechanism, for example a pen-stylus, finger, or palm, is made on the surface of the touchscreen, the two layers are pressed together. Upon contact, a voltage gradient is applied to the first layer and measured as a distance by the second layer to determine a horizontal coordinate of the contact on the screen. The voltage gradient is subsequently applied to the second layer to determine a vertical coordinate of the contact on the screen. The combination of the horizontal coordinate and the vertical coordinate register an exact location of the contact on the contact-sensitive screen. Unlike capacitive touchscreens which rely on conductive input mechanisms, a resistive touchscreen is configured to sense contact from nearly any input mechanism. Although some embodiments of the e-paper tablet device 110 are described herein with reference to a capacitive touchscreen, one skilled in the art would recognize that a resistive touchscreen could also be implemented.

In yet another alternate embodiment, the contact-sensitive screen is an inductive touchscreen. An inductive touchscreen comprises a metal front layer that is configured to detect deflections when contact is made on the screen by an input mechanism. Accordingly, an inductive touchscreen is configured to sense contact from nearly any input mechanism. Although some embodiments of the e-paper tablet device 110 are described herein with reference to a capacitive touchscreen, an ordinarily skilled artisan would recognize that alternative touchscreen technology may be implemented, for example, an inductive touchscreen could also be implemented.

The cloud server 130 is configured to receive information from the e-paper tablet device 110 and/or communicate instructions and/or documents to the e-paper tablet device 110, according to some embodiments of the invention. As illustrated in FIG. 1, the cloud server 130 may comprise a cloud data processor 150 and a data store 160. Data recorded and stored by the e-paper tablet device 110 may be communicated via the network 140 to the cloud server 130 for storage in the data store 160. Similarly, the e-paper tablet device 110 may receive data from the cloud service 130, including documents simultaneously worked on by a user of the e-paper tablet device 110 and a user on another computing device also editing the same document. Among other things, the data store 160 may store documents, images, or other types of content generated or recorded by a user through the e-paper tablet device 110. In some embodiments, the cloud data processor 150 monitors the activity and usage of the e-paper tablet device 110 and communicates processing instructions to the e-paper tablet device 110 and likewise may have communications with other devices as well. For example, the cloud data processor 150 may regulate synchronization protocols for data stored in the data store 160 with the e-paper tablet device 110 and possibly with other devices as well.

Interactions between the e-paper tablet device 110 and the cloud server 130 are typically performed via the network 140, which enables communication between the e-paper tablet device 110 and the cloud server 130. In one embodiment, the network 140 uses standard communication technologies and/or protocols including, but not limited to, links using technologies such as Ethernet, 802.11, worldwide interoperability for microwave access (WiMAX), 3G, 4G, LTE, digital subscriber line (DSL), asynchronous transfer mode (ATM), InfiniBand, and PCI Express Advanced Switching. The network 140 may also utilize dedicated, custom, or private communication links. The network 140 may comprise any combination of local area and/or wide area networks, using both wired and wireless communication systems. The cloud server 130 may be alternatively implemented, and in some embodiments may be replaced by hardware and software that provide similar functionality while possibly not being considered a conventional cloud server.

FIG. 2 is a block diagram of the system architecture of an e-paper tablet device 110, which operates as a computerized annotation system, according to one example embodiment. In the embodiment illustrated in FIG. 2, the e-paper tablet device 110 comprises an input detector module 210, an input digitizer 220, a display system 230, and a graphics generator 240.

The input detector module 210 recognizes that a gesture has been or is being made on the screen of the e-paper tablet device 110. The input detector module 210 refers to electronics integrated into the screen of the e-paper tablet device 110 that are configured to interpret an encoded signal generated by contact between the input mechanism 120 and the screen into a recognizable gesture. To do so, the input detector module 210 may evaluate properties of the encoded signal to determine whether the signal represents a gesture made intentionally by a user or a gesture made unintentionally by a user. The input detector module 210 may also assist in handling textual input when the e-paper tablet device 110 has a keyboard or keyboard functionality.

The input digitizer 220 may be configured to convert the analog signal encoded by the contact between the input mechanism 120 and the screen into a digital set of instructions. The converted digital set of instructions may be processed by the e-paper tablet device 110 to generate or update a user interface displayed on the screen to reflect an intentional gesture.

The display system 230 may include the physical and firmware (or software) components to provide for display (*e.g.,* render) on a screen a user interface. The user interface may correspond to any type of visual representation that may be presented to or viewed by a user of the e-paper tablet device 110.

Based on the digital signal generated by the input digitizer 220, the graphics generator 240 may be configured to generate or update graphics of a user interface to be displayed on the screen of the e-paper tablet device 110. The display system 230 may be configured to present those graphics of the user interface for display to a user using electronics integrated into the screen.

When an input mechanism 120 makes contact with a contact-sensitive screen of an e-paper tablet device 110, the input detector module 210 recognizes a gesture has been made through the screen. The gesture may be recognized as a part of an encoded signal generated by a force (e.g., pressure) sensor in the input mechanism 120 and/or corresponding electronics of the screen of the display system 230. The encoded signal is transmitted to the input detector module 210, which evaluates properties of the encoded signal in view of at least one gesture rule to determine whether the gesture was made intentionally by a user. If the input detector module 210 determines that the gesture was made intentionally, the input detector module 210 communicates the encoded signal to the digitizer output. The encoded signal is an analog representation of the gesture received by a matrix of sensors embedded in the screen of the device 110.

**In** one example embodiment, the input digitizer 220 translates the physical points on the screen that the input mechanism 120 made contact with into a set of instructions for updating what is provided for display on the screen which may also be stored in a computer memory (e.g., the memory 604 shown in FIG. 6). For example, if the input detector module 210 detects an intentional gesture that swipes from a first page to a second page, the input digitizer 220 receives the analog signal generated by the input mechanism 120 as it performs the swiping gesture. The input digitizer 220 generates a digital signal for the swiping gesture that provides instructions for the display system 230 of the e-paper tablet device 110 to update the user interface of the screen to transition from, for example, a current (or first page) to a next (or second page, which may be before or after the first page).

In one example embodiment, the graphics generator 240 receives the digital instructional signal, such as a swipe gesture indicating page transition (*e.g.,* flipping or turning) generated by the input digitizer 220. The graphics generator 240 generates graphics or an update to the previously displayed user interface graphics based on the received signal. The generated or updated graphics of the user interface are provided for display on the screen of the e-paper tablet device 110 by the display system 230, *e.g.,* displaying a transition from a current page to a next page to a user.

In the displayed embodiment of the FIG. 2, the graphics generator 240 comprises a rasterizer module 250, a depixelator module 260, an anchor module 270, and a refine module 280. Input gestures drawn by a user on a contact-sensitive surface are received as vector graphics and are input to the rasterizer module 250. The rasterizer module 250 converts the input vector graphics to raster graphics, which can be displayed (or provided for display) on the contact-sensitive surface. The depixelator module 260 may apply image processing techniques to convert the displayed raster graphics back into vector graphics, for example to improve processing power of the e-paper tablet device 110 and to conserve memory of the e-paper tablet device 110. In at least one implementation, the depixelator module 260 may convert a displayed raster graphic back to a vector graphic when exporting content displayed on the screen into a different format or to a different system.

The graphics generator 240 may include an anchor module 270 that anchors user gestures (e.g., lines forming annotations) related to text and other information on the display to anchor those annotations to the corresponding text or other information such that these annotations remain anchored to the corresponding text or other information even when displayed on other systems or in light of further changes to the underlying text (e.g., the addition or deletion of words or figures) or changes to other annotations. The anchor module 270 may comprise suitable electronic hardware to carry out its necessary functions and/or may comprise operations via a processor, such as the processor 602 shown in FIG. 6.

The graphics generator 240 may include a refine module 280 that receives and interprets user-input commands received during the Refine Mode discussed below, interacts with the anchor module 270 to determine which portions of a document displayed on the e-paper tablet device 110 relate to a command received by the user, typically via a pen-stylus, and engages other functionality on the e-paper tablet device 110 to carry out and complete the received command. The refine module 280 may comprise suitable electronic hardware to carry out its necessary functions and/or may comprise operations via a processor, such as the processor 602 shown in FIG. 6.

Further details about structures and functions of e-paper tablets and their graphical displays can be found in USP 11,158,097 to Martin Sandsmark and Gunnar Sletta entitled "Generating vector graphics by processing raster graphics" and in USP 10,824,274 to Sondre Hoff Dyvik, Martin Sandsmark, and Magnus Haug Wanberg, entitled "Interactive displays," both of which are incorporated by reference herein.

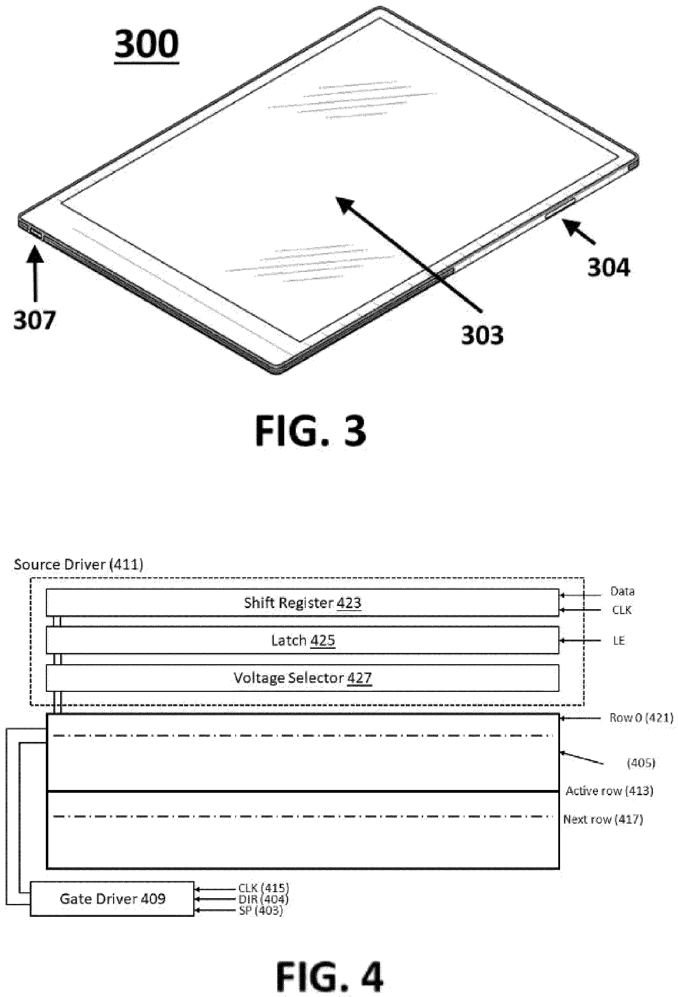

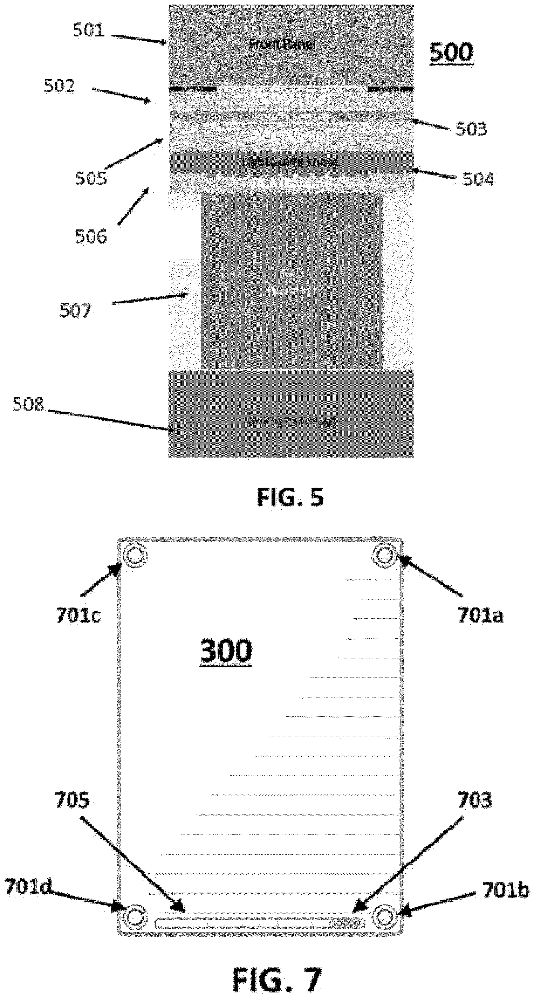

FIG. 3 illustrates a front and right perspective view of an e-paper tablet 300, which operates as a computerized annotation system, having the functionality described for the e-paper tablet device 110 in FIGs. 1-2. Among other things, the e-paper tablet300 includes a touch-sensitive display 303. The display 303 has been treated to provide a paper-feeling for users of the device when they engage with it using an input device 120. FIG. 3 also shows a charging area 304 for recharging the input device 120, when the input device is an active pen-stylus, according to an embodiment of the invention. Inside the e-paper tablet 300 near where the charging area 304 is located may be a set of magnets to hold the input device 120 in place while it is re-charging. FIG. 3 also shows a USB-c connector 307 that may be used to provide electrical power to the e-paper tablet 300, as well as transmitting various types of data into or out of the e-paper tablet 300. The e-paper tablet 300 also includes several actuators and other features that will be shown below in FIGs. 5-10.

FIG. 4 illustrates hardware components of an example Electrophoretic Display (EPD) in accordance with a disclosed embodiment. As discussed, a variety of display technologies may be employed, including EPDs, LCDs, and reflective LCDs (rLCDs). The specific display device deployed may be part of the display system 230 of the e-paper tablet device 110 shown in FIG. 2 and produce the images shown on the display 303 of the e-paper tablet 300 shown in FIG. 3. The EPD includes a gate driver 409, a source driver 411, a shift register 423 with data and clock signal line, a latch 425, a voltage selector 427, and rows making up a display 405. The EPD industry borrowed certain components and concepts from the LCD industry; however, these two devices have some fundamental differences as well. Of particular relevance here is the persistence of pixels in EPD displays. Unlike LCD displays, EPD displays do not require the frequent refreshing required in an LCD display. In an EPD display, once a neutral voltage is set for a pixel, the pixel will not change, for example, and will persist for a long period of time, especially relative to an LCD display.

As mentioned, Electrophoretic displays (EPDs) 405 have utilized many aspects of LCD production infrastructure and driving mechanisms. The driving electronics typically consist of a gate driver (GD) 409 and a source driver (SD) 411. The display 405 has multiple rows of pixels. Pixel values within a row may be changed, *e.g.,* logic high voltage may be a "black" pixel and a logic low voltage or "ground" may be a no color pixel. The pixels in the EPD 405 function similarly to small capacitors that persist over long time intervals. An EPD pixel contains a large number of charged particles that are suspended in a liquid. If a charge is applied, the particles will move to a surface where they become visible. White and black particles have opposite charges such that a pixel's display may change from white to black by applying an opposite charge to the pixel. Thus, the waveforms applied to an EPD comprise long trains of voltages to change from black to white or vice versa. The EPD arts are also known to have the ability to apply variable voltage levels that mix the white and black particles to produce various shades of gray. Voltage levels in a pixel also may be tiered between to provide shades between no color and black (*e.g.,* levels of grey). Groups of pixels around each other may form a region that provides some visible characteristic to a user, *e.g.,* an image on a screen, *e.g.,* of the display system 230 of the e-paper tablet device 110.

To change pixel values in a region, a scan of a display 405 will conventionally start at a top row, *e.g.,* row 0 421, and apply voltages to update pixels within a particular row where pixels need to be changed to correspond with the image that is displayed. In this example, a start pulse (GDSP) 403 can be used to reset the driver 411 to row 0 421, and a direction (DIR) 404 can be used to reset a direction. A row-by-row selection is made by driving the driver gate 409 to select a row, *e.g.,* active row 413. All pixels in one row are addressed concurrently using data transferred to the display. Latch 425 receives from the shift register 423 the next set of voltages to be applied to a row of pixels. When the scan of the active row is completed and, if necessary, pixels changed or updated, a clock pulse (GDCLK) 415 is issued to the driver gate 409 to change to the next row 417 for a scan.

As mentioned above, an ordinary artisan will recognize that a similar function can be accomplished also with a standard LCD, OLED, MicroLED or other type of display, and the description of EPD technology is provided here merely for illustration of one embodiment of the invention.

The source driver 411 is used to set the target voltage for each of the pixels/columns for the selected row. It consists of a shift register 423 for holding the voltage data, a latch circuit 425 for enabling pixel data transfer while the previous row is being exposed, and a voltage selector (multiplexer) 427 for converting the latched voltage selection into an actual voltage. For all rows to be updated all the voltage values have to be shifted into the register 423 and latched for the voltages to be available.

FIG. 5 illustrates a representative display stack 500 comprised of various display component layers associated with the contact-sensitive display on the e-paper tablet device 110. From the bottom layer to a top layer, these layers comprise an EPD display 507, an optical clear adhesive layer 506, a lightguide sheet 504, an optical clear adhesive layer 505, a touch sensor 503, an optical clear adhesive layer 502, and a front panel 501. The EPD display 507 rests above the device's writing technology 508 and may comprise components similar to the EPD display 405 described in FIG. 4. The writing technology 508 may comprise similar elements to the graphics generator 240 disclosed in FIG. 2. The optical clear adhesive layers 506, 504, 502 are employed to attach components from other portions in the stack 500 together but to do so in a manner that does not alter or impede the light transiting through the stack 500 to the user. The touch sensor 503 operates as a portion of the touchscreen that has been described above. The stack 500 is conventionally capped by a front panel 501 that the user may touch during device operation. The front panel 501 is conventionally comprised of glass but could be comprised of other materials. For example, US Application No. 18/114,896, filed on 27 February 2023, entitled "Cover Lens for Consumer Electronics Device," naming as its inventors Hessel Vink, Lars Årtun, and Thong Xuan Nguyen, which is incorporated by reference, describes one such front panel suitable for implementation in the stack 500.

The lightguide sheet 504 shown in FIG. 5 may be an ultra-thin lightguide sheet. Consumer demands have compelled display stacks like the display stack 500 to become increasingly thinner so that the overall device (e.g., the e-paper tablet 300) can itself become thinner and so that the parallax effect due to the separation between the EPD and the writing surface can be reduced.

It is noted that although the discussion herein is in the context of a e-paper tablet device 110, the principles described may be applied to other computer systems including, for example, personal computers, smartphones, and other tablet devices (e.g., APPLE IPAD, SAMSUNG GALAXY TAB, AMAZON FIRE). Computer systems are further described with respect to FIG. 6.

FIG. 6 is a block diagram illustrating components of an example machine able to read instructions from a machine-readable medium and execute them in a processor (or controller), according to one embodiment. In this example, FIG. 6 shows a diagrammatic representation of a machine in the example form of a computer system 600 (*e.g.,* the computing portions of the e-paper tablet device 110 shown in FIG. 1) within which program code (*e.g.,* software) for causing the machine to perform any one or more of the methodologies discussed herein may be executed. The e-paper tablet device 110 may include some or all of the components of the computer system 600. The program code may be comprised of instructions 624 executable by one or more processors 602. In the e-paper tablet system 110, the instructions may correspond to the functional components described in FIGS. 1, 2, and 4, for example. FIG. 6 is an example of a processing system, of which a some of the described components or all of the described components may be leveraged by the modules described herein for execution.

While the embodiments described herein are in the context of the e-paper tablet system 110, it is noted that the principles may apply to other touch sensitive devices. In those contexts, the machine of FIG. 6 may be a server computer, a client computer, a personal computer (PC), a tablet PC, a set-top box (STB), a personal digital assistant (PDA), a cellular telephone, a smartphone, a web appliance, a network router, an internet of things (IoT) device, a switch or bridge, or any machine capable of executing instructions 624 (sequential or otherwise) that specify actions to be taken by that machine. Further, while only a single machine is illustrated, the term "machine" shall also be taken to include any collection of machines that individually or jointly execute instructions 624 to perform any one or more of the methodologies discussed herein.

The example computer system 600 includes one or more processors 602 (*e.g.,* a central processing unit (CPU), one or more graphics processing units (GPU), one or more digital signal processors (DSP), one or more application specific integrated circuits (ASICs), one or more radio-frequency integrated circuits (RFICs), or any combination of these), a main memory 604, and a static memory 606, which are configured to communicate with each other via a bus 608. The computer system 600 may further include visual display interface 610. The visual interface may include a software driver that enables displaying user interfaces on a screen (or display). The visual interface may display user interfaces directly (*e.g.,* on the screen) or indirectly on a surface, window, or the like (*e.g.,* via a visual projection unit). For ease of discussion the visual interface may be described as a screen or display screen. The visual interface 610 may include or may interface with a touch enabled screen, *e.g.,* of the e-paper tablet system 110 and may be associated with the display system 230. The computer system 600 may also include an input device 612 (*e.g.,* a pen-stylus, a keyboard, and/or touch screen keyboard), a cursor control device 614 (*e.g.,* a mouse, a trackball, a joystick, a motion sensor, or other pointing instrument), a storage unit 616, a signal generation device 618 (*e.g.,* a speaker), and a network interface device 620, which also are configured to communicate via the bus 608.

The storage unit 616 includes a machine-readable medium 622 on which is stored (or encoded) instructions 624 (*e.g.,* software) embodying any one or more of the methodologies or functions described herein. The instructions 624 (*e.g.,* software) may also reside, completely or at least partially, within the main memory 604 or within the processor 602 (e.g., within a processor's cache memory) during execution thereof by the computer system 600, the main memory 604 and the processor 602 also constituting machine-readable media. The instructions 624 (*e.g.,* software) may be transmitted or received over a network 426 via the network interface device 620.

While machine-readable medium 622 is shown in an example embodiment to be a single medium, the term "machine-readable medium" should be taken to include a single medium or multiple media (*e.g.,* a centralized or distributed database, or associated caches and servers) able to store instructions (*e.g.,* instructions 624). The term "machine-readable medium" shall also be taken to include any medium that is capable of storing instructions (*e.g.,* instructions 624) for execution by the machine and that cause the machine to perform any one or more of the methodologies disclosed herein. The term "machine-readable medium" includes, but not be limited to, data repositories in the form of solid-state memories, optical media, and magnetic media.

The computer system 600 also may include the one or more sensors 625. Also note that a computing device may include only a subset of the components illustrated and described with FIG. 6. For example, an IoT device may only include a processor 602, a small storage unit 616, a main memory 604, a visual interface 610, a network interface device 620, and a sensor 625.

### REPRESENTATIVE E-PAPER TABLET

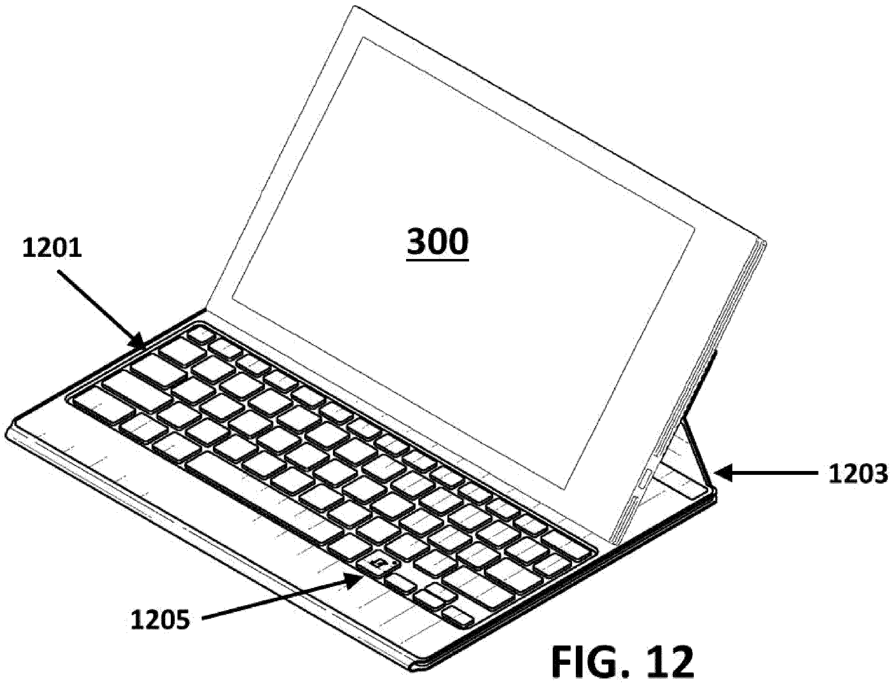

FIG. 3 provided a representative view of an e-paper tablet 300, which operates as a computerized annotation system, resembling the e-paper 110 shown in FIGs, 1-2. FIG. 7 illustrates a rear view of the e-paper tablet 300 showing volcano feet 701a-701d, a pogo pad 703, and an antenna region 705, according to an embodiment of the invention. The antenna region 705 resides outside and above the location for a main antenna (e.g., an antenna on the e-paper tablet device 110 that communicates with the cloud server 130 shown in FIG. 1 and which may generate a beacon signal for communicating with a pen-stylus) for the e-paper tablet 300, allowing the e-paper tablet device 300 to connect to the Internet, for example. The pogo pad 703 allows the e-paper tablet device 300 to connect to other devices, such as a folio device having a keyboard like the hardware configuration shown below in FIG. 12.

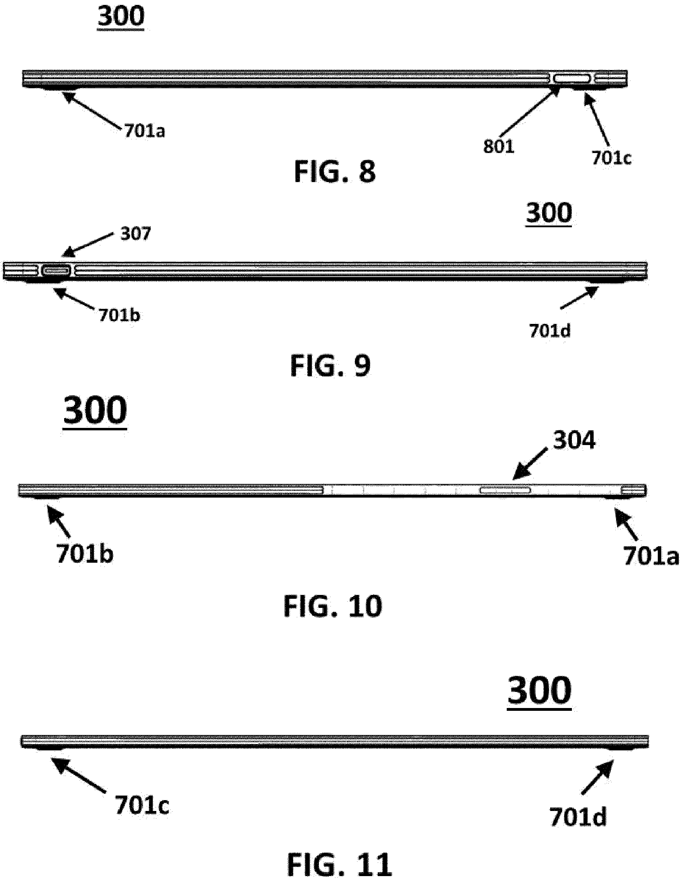

FIG. 8 illustrates a top view of the e-paper tablet device 300 showing volcano feet 701a, 701d, and a power button 801, according to an embodiment of the invention.

FIG. 9 illustrates a bottom view of the e-paper tablet device 300 showing volcano feet 701b, 701d and the USB-c connector 307, according to an embodiment of the invention.

FIG. 10 illustrates a right view of the e-paper tablet device 300 showing volcano feet 701b, 701a, and the charging area 304 for recharging the input device 120, when the input device is an active pen-stylus, according to an embodiment of the invention. Inside the e-paper tablet 300 near where the charging area 304 is located may be a set of magnets to hold the input device 120 in place while it is re-charging.

FIG. 11 illustrates a left view of the e-paper tablet device 300 showing volcano feet 701c, 701d, according to an embodiment of the invention.

FIG. 12 illustrates the e-paper tablet device 300 connected to a removable keyboard 1201 and held in a folio 1203, according to an embodiment of the invention. The keyboard 1201 may have one or more special keys 1205, whose actuation will be discussed below, according to an embodiment of the invention. The keyboard 1201 and its operations in providing textual inputs to the e-paper tablet device 300 may proceed in a conventional manner. The interested reader may find further details regarding an embodiment of the folio 1203 and keyboard 1201 in US patent application 17/985,755, entitled "Electric Terminals Electrically Connecting a Device Mount to a Computing Device," by Gaute Wiig Nordby, Borge Strand-Bergesen, Erik Andre Bengtsson, and Vegard Bakke Svendsen on Nov. 11, 2022 and US patent application 17/985,754 , entitled "Device Mount For Supporting A Computing Device," by Gaute Wiig Nordby, Borge Strand-Bergesen, Erik Andre Bengtsson, and Vegard Bakke Svendsen on Nov. 11, 2022, both application incorporated herein by reference in their entirety.

### EXAMPLE ACTIVE PEN-STYLUS

An active pen-stylus (or more commonly "active pen") is a pen-stylus input device that allows users to *e.g.,* write, sketch or draw on the display of the computing device, *e.g.,* the e-paper tablet device 110, assisting the e-paper tablet device 110 operate as a computerized annotation system. An active pen-stylus includes digital components and/or circuitry that communicate with the computing device, e.g., the e-paper tablet. This communication enables advanced features such as force (e.g., pressure) sensitivity, tilt detection, programmable buttons, palm detection, eraser tips, memorizing settings, and writing data transmission. Viewed more expansively, communications between the computing device and the active pen-stylus enables a wide mix of peripheral sensors to be placed in the active pen-stylus with the resulting data reported to the computing device, e.g., the e-paper tablet. Such sensors placed in the active pen-stylus may range from simple buttons to enhanced artificial intelligence features.

An active pen's electronic components typically include a power source that may enable the device's electronics to provide lower latency and greater fidelity than other pen types, e.g., a passive pen. Active pens provide a number of advantages over passive pens, including hover latency, e.g., an active pen may typically be activated by merely being in proximity to a display, e.g., the display associated with the e-paper tablet device 110.

Once the active pen touches or contacts a display screen of a device like the e-paper tablet device 110, electronics associated with the display screen generates a signal which the e-paper tablet (e.g., the e-paper tablet device 110) can process as a gesture made by the user. Upon detecting the gesture by the pen-stylus, electronics within the contact-sensitive screen generates a signal that encodes instructions for displaying content or updating content previously displayed on the screen of the e-paper tablet device based on the movement of the detected gesture across the screen.

**In** contrast with an active pen, a passive pen typically has no internal power source. A passive pen remains in an inactive state until the pen touches a device screen (e.g., a tablet device screen) causing a signal to pass from the device through the passive stylus and back to the device. The electronics associated with a passive pen may be integrated into the pen-stylus device or even provided in a small cartridge that is placed inside a pen-shaped stylus cover designed to better suit human ergonomics than the small cartridge containing the electronics and other components.

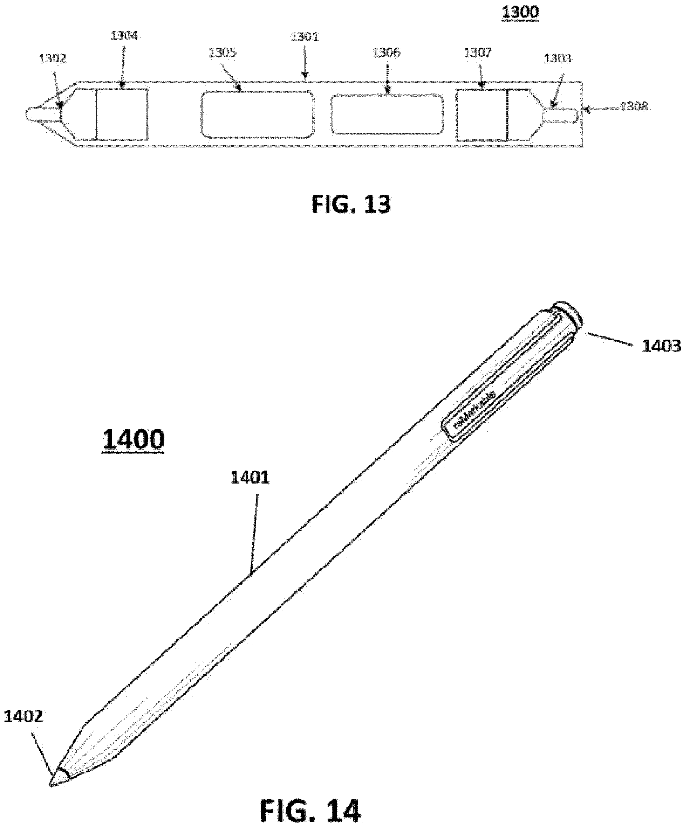

FIG. 13 illustrates an active pen-stylus 1300 that comprises a core member 1302 that itself comprises one or more antennas configured for communications with a tablet device, such as the e-paper tablet device 110, which operates as a computerized annotation system. The active pen-stylus 1300 may include one or more force sensing systems 1304 that detect force, e.g., the forces exerted on a display of an e-paper tablet device 110 by a user. In addition, the active pen-stylus 1300. In addition, this element may also help emulate human interaction with conventional writing utensils like pencil and paper, e.g., render "a pencil and paper stack feeling". The active pen-stylus 1300 also includes a power source, e.g., a battery 1306. Among other things, the battery 1306 allows the active pen-stylus 1300 to support a "hover" function that allows the active pen-stylus 1300 to enter a sleep state for battery charge preservation when it is not actively engaged with the display of the e-paper tablet device 110 and to wake up from the sleep state when the core member 1302 detects a proximity to the display of the e-paper tablet device 110. The active pen-stylus 1300 might not actually draw lines on the display of the e-paper tablet device 110 until a tip of the active pen-stylus 1300 physically touches the display of the e-paper tablet device 110, according to an embodiment of the invention.

An active pen 1300 conventionally comprises a PCBA 1305 which includes electronic components needed for driving the signal lines associated with the core member 1302. The PCBA 1305 could alternatively be provided as a flexible printed circuit (FPC). The PCBA 1305 may include an appropriate active pen PCBA or IC/ASIC/MCU that processes data received from the core member 1304 for sensing force or displacement pressure with high resolution sensing of the force during the interaction between the active pen 1300 and an object, e.g., the surface of the computing device, such as the e-paper tablet device 110).

The active pen 1300 may serve as the input mechanism 120 described in FIG. 1 that provides data input to the e-paper tablet device 110, which may result in a drawing appearing on the display of the e-paper tablet device 110. The active pen 1300 may also include an erasure system that receives user instructions related to erasing portions of a display on the screen of the associated computing device, e.g., the e-paper tablet device 110. In a sense, the erasure system operates identically as the active pen-stylus system but where one draws, the other erases.

In operation, the force sensing system 1304 receives physical forces imparted to a marker tip of the active pen 1300 (e.g., the marker tip 1302 shown in FIG. 13) when the marker tip engages with a display on a tablet device (e.g., the e-paper tablet device 110) and translates the physical force received into an electronic signal that is transmitted to the PCBA 1305 whose electronic components may perform a variety of processes on the signals received. The PCBA 1305 may then transmit the signals back to the tablet device (e.g., the e-paper tablet device 110) for further action (e.g., drawing a line).

In embodiments where a secondary antenna system in the active pen 1300 enables tail eraser functionality, the active pen 1300 also comprises a second antenna system 1303, which enables the active pen 1300 to transmit and receive signals with the computing device (*e.g.,* the e-paper tablet device 110) through the tail eraser portion of the active pen 1300 near a cap 1308. In this embodiment, the active pen 1300 also includes a second force (e.g., pressure) sensing system 1307 that controls the force (e.g., pressure) imparted to the display of the computing device from the erasure activity. Likewise, the PCBA 1305 may include an appropriate active pen PCBA or IC/ASIC/MCU that process data associated with erasure functionality received from the second antenna system 1303.

The active pen 1300 also typically includes an external casing 1301 as a pen-stylus holder, typically formed in a cylindrical shape and made of non-metal material such as a plastic that contains the internal electronics within the casing 1301. The top end of the casing 1301 may be provided with the cap 1308.

FIG. 14 illustrates an external casing 1401 for a pen-stylus 1400 designed to fit a user's hand, according to an embodiment of the invention. The pen-stylus 1400 includes a marker tip 1402 and an eraser 1403. The marker tip 1402 operates as a part of the core member 1302 shown in FIG. 13, and the eraser 1403 operates as part of the second antenna system 1303 shown in FIG. 13. When an active pen-stylus (e.g., the pen-stylus 1300 and/or the pen-stylus 1400) includes multiple antennas as part of the core (e.g., the core 1302), then the pen-stylus may provide additional capabilities.

Further details about pen-styluses that may interoperate with embodiments of the invention may be found in U.S. patent application Ser No. 18/779,151, entitled "Replaceable Conductive Marker Tip," filed July 22, 2024, U.S. patent application Ser. No. 18/779,154, entitled "Advanced Paper Emulation," filed July 22, 2024, U.S. patent application Ser. No. 18/779,158 entitled "Marker Protection System," filed July 22, 2024, U.S. patent application Ser. No. 18/779,164 entitled "Marker Writing System," filed July 22, 2024, U.S. patent application Ser. No. 18/779,170 entitled "Captive Object Flexure Mechanism," filed July 22, 2024; and U.S. patent application Ser No. 18/779,149, entitled "Active Pen-Stylus Precise Eraser", filed July 22, 2024, all of which are owned by the Applicant of the present application and which are incorporated herein by reference in their entirety.

### ANCHORING ANNOTATIONS

E-paper tablet devices 110, such as the configuration shown in FIG. 12 may accept input from both a keyboard, such as keyboard 1201 shown in FIG. 12, and from an input mechanism, such as the pen-stylus 1301 shown in FIG. 13. Documents including text and drawings may also be uploaded from a memory storage unit (e.g., the cloud server 130 shown in FIG. 1) and edited on the e-paper tablet device 110, which operates as a computerized annotation system. In all these uses, e-paper tablet device users may both draw with a stylus and type with the keyboard.

As the user interacts with a document (e.g., both with the keyboard 1201 and the pen-stylus 1301), the e-paper tablet device 110 stores changes to the document in a memory (e.g., a local memory and/or a remote memory). The document contents stored in memory (e.g., memory 604 shown in FIG. 6) may be represented in a data structure that facilitates operations in distributed computing environments, such as the Conflict-free Replicated Data Type (CRDT) data structure. A CRDT data structure, which may be replicated across multiple computers in a network, typically has the following features: 1) an application can update any replica independently, concurrently and without coordinating with other replicas, 2) an algorithm (itself part of the CRDT data type) automatically resolves any inconsistencies that might occur, and 3) although replicas may have different states at any specific point in time, they will eventually converge into the document.

A data structure such as CRDT may be useful in other applications, such as coordinating and arranging inputs to a document in mixed mode situations, such as that shown in FIG. 12 when a user may input information from multiple devices, such as keyboard, a pen-stylus, and possibly other input mechanisms, and/or even contributions to a document may also be received from remote document creators. Thus, whether a single actor interacts with a tablet device, such as e-paper tablet device 110, using multiple input methods (e.g., keyboard and pen-stylus) or with collaborators, CRDT allows the resulting document to remain consistent. A document displayed on the display screen of a computerized annotation system may generally be encoded in a conflict-free replicated data type (CRDT) data structure in a computer memory of the computerized annotation system.

For example, a user may generate annotations to a document (e.g., free form gestures that may include sketches, drawings, markings, underlinings, and scribbles, e.g., made by the user with an input mechanism such as a pen-stylus). As a user applies a marker input device (e.g., a pen-stylus) to a physical screen, these annotations are recorded in a point-by-point manner at a hardware specific sampling interval. Each sequence of the pen-stylus input device touching the screen, moving about to record points and up to and including the being lifted, may be considered a single line. This line is then stored in the physical memory of the e-paper tablet device 110 (e.g., the memory 604 shown in FIG. 6). For every line that is created, the anchor module 270 shown in FIG. 2 may create a new group for that line (e.g., an annotation) or update existing groups of lines (e.g., other annotations). The anchor module 270 may be implemented in hardware and/or software for operation with the e-paper tablet device 110.

Annotations to a document should typically be displayed relative to any other elements (e.g., text and/or drawing) to which they pertain (even if the element is later altered or the document is displayed by different computer systems). Annotations have not conventionally been tethered (or anchored) to their corresponding text, such that changes to the text and/or changes made to the annotations themselves and/or display of the text on a different device, cause the position of the annotations relative to the corresponding text to become misaligned in device displays such that the user can no longer determine what part of the text pairs with a given annotation.

Annotation anchoring enables text, drawings, and annotations in a document to retain their original (e.g., spatial) relationship regardless of document alterations or which computer system renders (displays) the document. Further details regarding anchoring annotations may be found in US Patent Application No. 18/380,265, entitled "Anchoring annotations," that names as its inventors Gunnar Sletta and Stian Suren, filed on Oct. 16, 2023, which is incorporated herein by reference in its entirety.

The anchor module 270 shown in FIG. 2 connects anchored groupings (e.g., collections of lines, glyphs, circles, etc.) with a unique identifier called the Anchoring ID. The anchor module 270 may assign a unique identifier (e.g., Anchoring ID) to every character in the digital text if the digital text has not arrived at the e-paper tablet device 110 already having a suitable CRDT format (e.g., with Anchoring IDs).

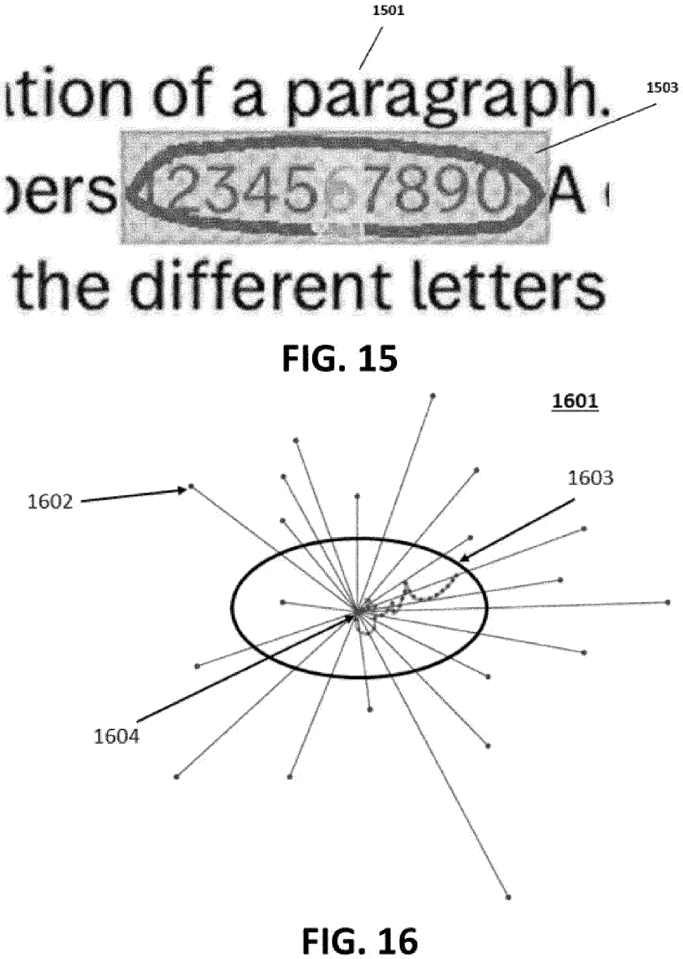

FIG. 15 provides an illustration of a portion of text 1501 in which a specific character (e.g., "A") has received a numerical identifier (e.g., Anchoring ID "1234567890" 1503). An annotation may be anchored to this numerical identifier. For example, the anchor module 270 may assign a unique identifier (e.g., Anchoring ID) to each character in a document in CRDT if the document does not already have such unique identifiers. Using these unique identifiers, the anchor module 270 effectively knows the location of a character relative to nearby characters (e.g., adjacent or within a threshold number of characters).

A character's CRDT identification may take many forms and does not need to comprise an entirely numerical sequence. As the user edits the digital text (having a CRDT representation), by using a virtual or physical keyboard of the e-paper tablet device 110, edits are made to the digital text in memory, but the unique identifiers per character (e.g., CDRT identifiers) remain the same. Even deleted characters may retain their Anchoring ID and relative position in the digital text, even if they are no longer visible to the user. Thus, the anchor module 270 may continuously derive the physical position of every Anchoring ID associated with the display screen, regardless of how the user edits the document. The anchoring operations of the anchor module 270 may also operate when the digital text is updated as a result of receiving an updated version of the digital text from the cloud storage unit 130 shown in FIG. 1.

When a user inserts or adds an annotation to a document, the anchor module 270 may associate the annotation with a unique identifier (e.g., Anchoring ID) of text (e.g., a single character, word, or paragraph) in the document (referred to as an "anchor point"). This process positions the annotation in the document relative to the position/location of the associated anchor point in the document. For example, if text around an anchor point changes, the anchor module 270, or another element of the e-paper tablet device 110, may move the anchor point to a different position in the document and update the position of the annotation in the document to move in accordance with the anchor point in the display on the screen. Thus, the annotation moves with the anchor point. Accordingly, the movement of the annotation is the same as the movement of the anchor point.

If anchor positions move, the display of anchored groups will move along with them, based on the rules outlined in the display algorithm associated with the display system 230. After the anchor module 270 assigns unique identifiers to existing characters, if a new character is inserted into the document, the anchor module 270 assigns the new character a unique identifier (e.g., Anchoring ID). By employing this system, then the unique identifier of a character may stay the same even if text characters are inserted or removed before or after that character. The anchor module 270 may use these unique identifiers to determine the geometric position of anchor points across edits and across devices or clients.

The anchor module 270 may select an anchor point for an annotation based on several different parameters. Example parameters include: 1) geometry (e.g., the initial position of the annotation in the document or the shape or size of the annotation), and 2) time (e.g., when the user generates the annotation relative to other annotations or text). For example, after the user generates an annotation, the anchor module 270 may anchor the annotation to the nearest character. In another example, the anchor module 270 anchors the annotation to the character closest to a center of the annotation.

The anchor module 270 may enable multiple annotations to be grouped together to share a single anchor point. For example, a bracket, circle, and triangle annotations (collectively forming an exclamation mark) may be grouped together by the anchor module 270 so these elements share a single anchor point. The anchor module 270 may perform such groupings if an annotation is within a threshold distance of another annotation or if the user generates an annotation within a threshold time of another annotation, according to an embodiment of the invention, according to an embodiment. Such groupings may help preserve a drawing or sketch that includes multiple annotations (e.g., the lines that comprise the handwritten exclamation mark described above). As such, the grouping may capture and retain the user's annotation intention.

Anchoring may be implemented using a variety of approaches, such as the approach illustrated in FIG. 16. FIG. 16 shows an annotation "On" represented as a series of points, such as the point 1604, according to an embodiment of the invention. The anchor module 270 may determine where other objects (e.g., annotations) exist, such as the points shown at a distance from the annotation "on," such as point 1602. The anchor module 270 may apply a limit to determine when these other objects are in range to be joined with the annotation "on". For example, in FIG. 16, the anchor module 270 has applied an elliptical shape 1603 around the point 1604 in its determination as to which other objects are in range of the annotation "on". The anchor module 270 will similarly employ an elliptical shape around the other points in the "on" annotation in making its determination. (Note: the points shown in FIG. 16 are for illustration purposes. In reality there are many more points for an annotation like "on" than shown in FIG. 16.) The anchor module 270 could apply other shapes in carrying out this determination, and the anchor module 270 could apply different sizes of testing regions, according to an embodiment of the invention.

The implementation shown in FIG. 16 does not involve using a bounding box around an annotation while other implementations may involve bounding boxes. Bounding boxes are rectangular boxes that contain one or more objects (e.g., annotations), according to an embodiment of the invention. In the embodiments using bounding boxes, the anchor module 270 compares bounding boxes around annotations to find other lines (e.g., annotations) to group with and form larger, composite annotations. As shown in FIG. 16, bounding boxes may be avoided if the anchor module 270 instead examines all the individual points that comprise an annotation to determine if these points are in the proximity of other points (that form another annotation) and then the anchor module 270 determines if it should link these two annotations together to form a composite annotation. Thus, such an embodiment, the bounding box check by the anchor module 270 is replaced with point-by-point checking where each annotation is comprised of many of individual points, forming the polyline that comprises the annotation (e.g., a letter or a shape). Thus, the anchor module 270 performs a check to compare the distance from each point in new line (e.g., annotation) to other points in the existing line/group of lines (e.g., annotations) that may have some overlap. If not one of the point-to-point distances in one annotation is within the margin of another annotation employing, then the anchor module 270 does not group the new line (e.g., annotation) with the other annotations.

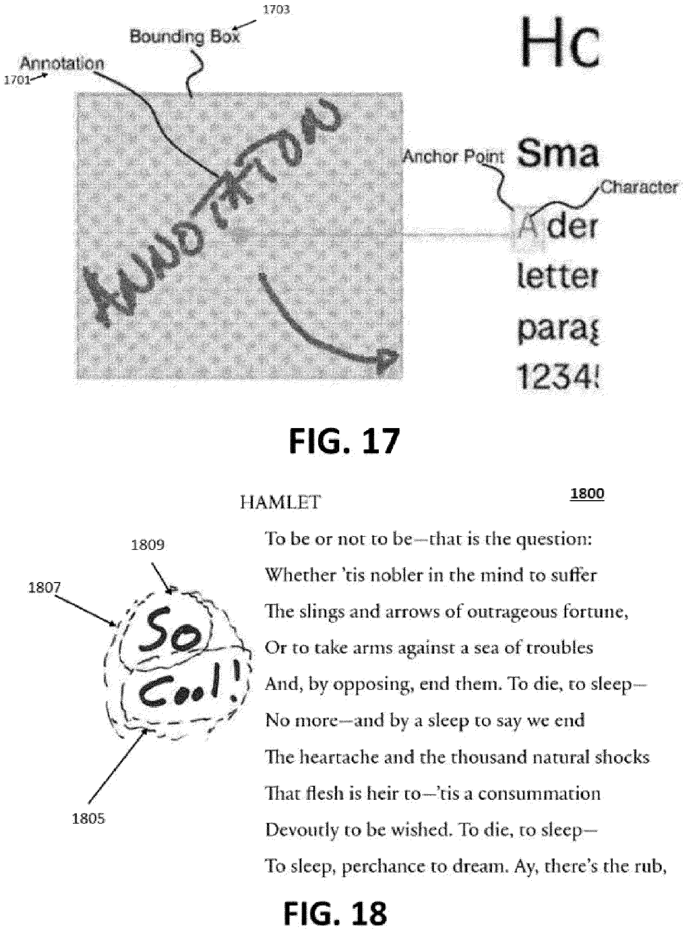

FIG. 17 illustrates an annotation 1701 (e.g., a strikeout mark) using a bounding box 1703 anchored to a text character (e.g., "A") by the anchor module 270. In this example, the anchor module 270 selects the text character "A" as the anchor point for the annotation 1701 because the character is the closest character to the center of the bounding box 1703.

FIG. 18 illustrates a "bounding box free" embodiment applied to two annotations, 1805, 1809. As shown in FIG. 18, the anchor module 270 has explored a polygon shaped region around the annotation "so" and the annotation "cool!" and the anchor module 270 has determined that these two annotations overlap in the manner discussed above for FIG. 16. Consequently, the anchor module 270 forms the composite annotation 1807 that is comprised of both the annotation 1805 and the annotation 1809.

**In** pseudo code the logic executed by the anchor module 270 would look like:
for ptA in groupA (e.g., "So")
for ptB in groupB (e.g., "Cool")
if ellipseAround(ptA).contains(ptB) -> it is a match

For embodiments using bounding boxes, the anchor module 270 may use the center of the bounding box to find the closest point in the text to use as anchor. However, in embodiments not using a bounding box, the anchor module 270 may adjust the center by examining all the points in the group (e.g., annotation) and calculate an average position where the anchor module gives exponentially more weight to points in the annotation closer to the text. So, if the anchor module 270 encounters an annotation that includes an arrow point to the text, the anchor module 270 will most likely anchor the annotation closer to the tip of the arrow, even if the arrow is the top part of the overall annotation.

The anchor module 270 may determine if one or more (e.g., any) points in a new annotation intersect with existing text or annotations, according to an embodiment of the invention. If yes, the anchor module 270 labels the annotation as "vertically and horizontally anchored." If no, the anchor module labels the annotation as "vertically anchored." There may be a different determination depending on whether the new annotation is on top of the text or not:
a) For "vertically and horizontally anchored" annotations, (e.g., only) the anchor module 270 checks with other annotations that are already labeled "vertically and horizontally anchored" themselves.
b) For "vertically anchored" lines, (e.g., only) the anchor module 270 checks annotations that are already labeled "vertically anchored" themselves. Additionally, the anchor module 270 may add an extra margin around the bounding box of the new annotation to more easily form groups outside the text. Said differently, the anchor module 270 may enlarge the search area or bounding box. This may result in the search area or bounding box intersecting with more annotations for embodiments where bounding boxes are employed.

The anchor module 270 identifies an anchor point and selects the anchoring point for the annotation. For embodiments without bounding boxes, the anchor module 270 similarly groups the annotation and selects the anchoring point for the annotation.

If a character that an annotation is anchored to moves vertically in the document, the annotation's display on the display screen of the e-paper tablet device 110 may move the same distance vertically or substantially the same distance vertically (e.g., +/-10%). For example, if moving an annotation by the same distance vertically would result in the annotation overlapping with another annotation, the anchor module 270 interoperating with the display system 230 may adjust the movement so that the annotations do not overlap. If the character is only moved horizontally in the document, then the annotation may keep its position. In other words, the position of the anchored annotation may remain unchanged. Thus, for example, an annotation on the side of a paragraph (e.g., in the margin) will follow the paragraph if it is moved.

**If** a character that an annotation is anchored to moves in the document, the annotation's display may move the same distance both vertically and horizontally or substantially the same distances in the vertical and horizontal directions (e.g., +/-10%). Thus, for example, a circle annotation around a word will follow that word if it is moved. As described above, in some embodiments the annotation movements do not exactly match the anchor movements (e.g., to avoid creating overlapping annotations).

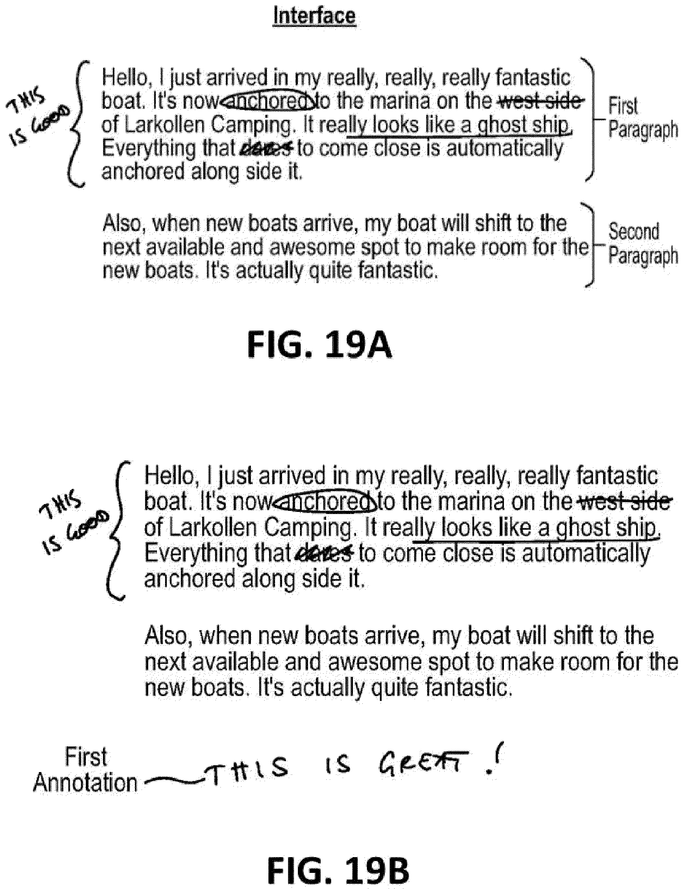

FIGS. 19A-19D illustrate the use of annotation anchoring by the anchor module 270 and the resulting impacts of anchoring on text displayed in a portion of an interface, such as a display screen, according to some embodiments.

FIG. 19A illustrates a portion of an interface displayed by a computer system (e.g., e-paper tablet device 110). The interface includes paragraphs of text and annotations anchored by the anchor module 270. In FIG. 19B, a first annotation is added by the user below the second paragraph.

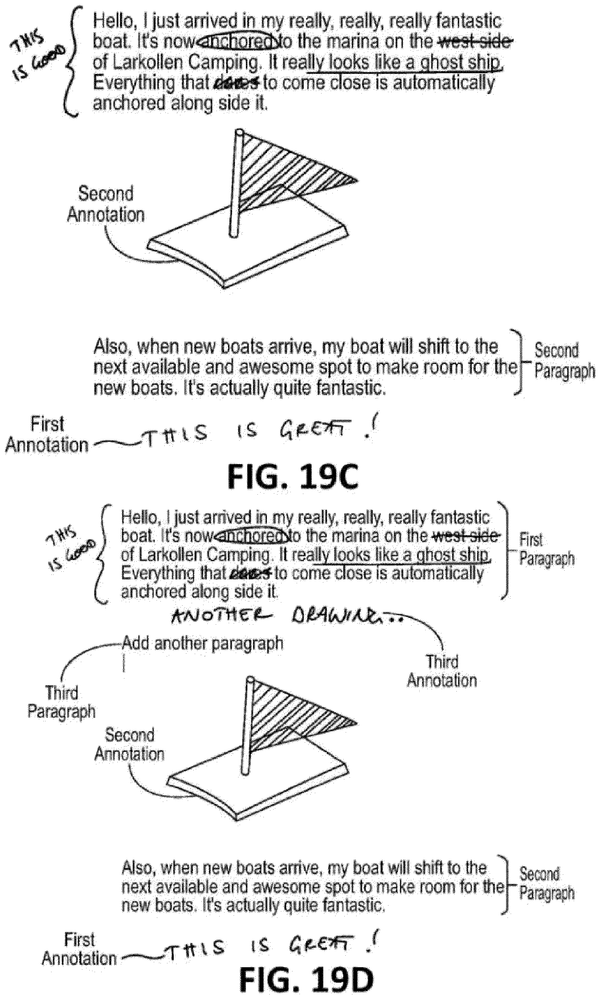

**In** FIG. 19C, the second paragraph is shifted downward by the user inserting a small drawing. Due to earlier anchoring by the anchor module 270, the first annotation is shifted downward along with the second paragraph. A second annotation is added by the user in the newly generated space between the first and second paragraphs.

In FIG. 19D, the user forms a third paragraph between the first paragraph and the second annotation. Because of earlier anchoring by the anchor module 270 the second annotation, along with the second paragraph and the first annotation, are shifted downward. Additionally, the anchor module 270 adds a third annotation between the first paragraph and the third paragraph.

Thus, the e-paper tablet device 110 may be configured to draw beneath and between text with corresponding anchoring matching the changes made. As such, drawings beneath and between text follow will remain in their natural position.

### REFINE MODE WITH AND WITHOUT FUNCTION KEY

The inventors have developed a way to assist users seamlessly change between the creative input mode (e.g., Creative Mode) and the editing/refinement mode (e.g., a Refine Mode) that complements the conventional Creative Mode. The Refine Mode serves as an aid for editing tasks where typed and handwritten notes have been creatively combined. At a high level, the Refine Mode bridges the gap between the handwriting, drawing and typing experience, allowing users of the e-paper tablet device 110 to fully explore and develop their thoughts into breakthroughs. Thus, Refine Mode comprises a "state" where users transition from creating to reviewing/editing content and combines type and handwritten notes and drawings with the objective of providing a smooth mixed input experience which allows for the best tool for the job at all times. The Refine Mode is supported and to some extent enabled by anchoring discussed immediately above. The Refine Mode could be implemented without anchoring but would be significantly more complicated in implementation.

As discussed in FIG. 12, the e-paper tablet device 110, which operates as a computerized annotation system, may have an accompanying keyboard 1201, and the keyboard 1201 may include a special function key 1205 that may be used to transition between a Creative Mode and the Refine Mode, e.g., actuating the special function key 1205 engages the Refine Mode and releasing (e.g., pressing/clicking) the special function key 1205 returns the user to the Creative Mode. The special function key 1205 may include an indicator light that signals to the user that the Refine Mode has been engaged. When actuating (e.g., pressing/clicking) the special function key 1205 a second time, the e-paper tablet device 110 returns to the Creative Mode, and the indicator light extinguishes indicating the change of mode to the user.

FIG. 20 illustrates a display 2005 of the e-paper tablet device 110 having a connection to a keyboard 1201 and with the user having access to a pen-stylus 1400. The hardware configuration shown in FIG. 20 is a somewhat abstract version of the hardware configuration shown in FIG.12. In the Creative Mode, the user may have access to menus and commands 2001 appropriate to the Creative Mode in which the user may draw new illustrations, write new comments, type new text and take other actions appropriate for a Creative Mode. The anchor module 270 takes appropriate actions to link the new creations input together as discussed above.

If the user desires to switch from the Creative Mode to the Refine Mode, the user may simply actuate (e.g., press/click) the special function key 1205 (shown above in FIG. 12) to switch modes. The user may rapidly switch between Creative Mode and Refine Mode by simply pressing the special function key on and off. Some users may become particularly adept at switching between modes. If the e-paper tablet device 110 is not attached to a physical keyboard, the user of the e-paper tablet device 110 may still engage the functionality associated with the Refine Mode via a selection tool or selection menu displayed on the e-paper tablet device 110. In other words, the same functions may be available to the user but possibly without the clean divide between a Creative Mode and a Refine Mode. So, for example, users may also engage the refinement functionality by making an appropriate selection on the menu 2001 in the display 2005, according to an embodiment of the invention.

When the user switches from the Creative Mode to the Refine Mode, the e-paper tablet device 110 and the pen-stylus 1400 continue to operate in the same manner - however, user inputs may now receive a different interpretation by the e-paper tablet device 110. Thus, in a sense the presence of the Refine Mode expands the user's possibilities for creation and engaging with the e-paper tablet device 110. For example, whereas one set of gestures in the Creative Mode might cause a line to be drawn across a paragraph when the same gesture is made in the Refine Mode, the e-paper tablet device 110 may interpret the gesture differently and cause a refinement (or edit) to occur in the document presented on the display 2005. For example, a line drawn across a paragraph in the Refine Mode might cause the paragraph to become highlighted or selected for a subsequent action like cutting and pasting the paragraph. The highlighted or selected area might include both text and handwritten notes and drawings.

Like the Creative Mode, the Refine Mode is enabled and underpinned by the anchor module 270, which may use the anchoring information to determine which portion of a display is selected by the user's gestures. As mentioned, such selections may include both text, handwritten notes, and drawings. The anchor module 270 may interact with a Refine module 280, according to an embodiment of the invention.

When the Refine Mode is active, the user may use the pen-stylus 1400 to select, move, rearrange and edit elements that are displayed on the e-paper tablet device 110. Since many of these actions start with a selection, both Refine Mode and the pen-stylus 1400 effectively share certain functionality underpinned by the anchor module 270 and the Refine module 280. Embodiments of Refine Mode encompass a broader scope of functionality that goes beyond the pen-stylus 1400 acting alone.

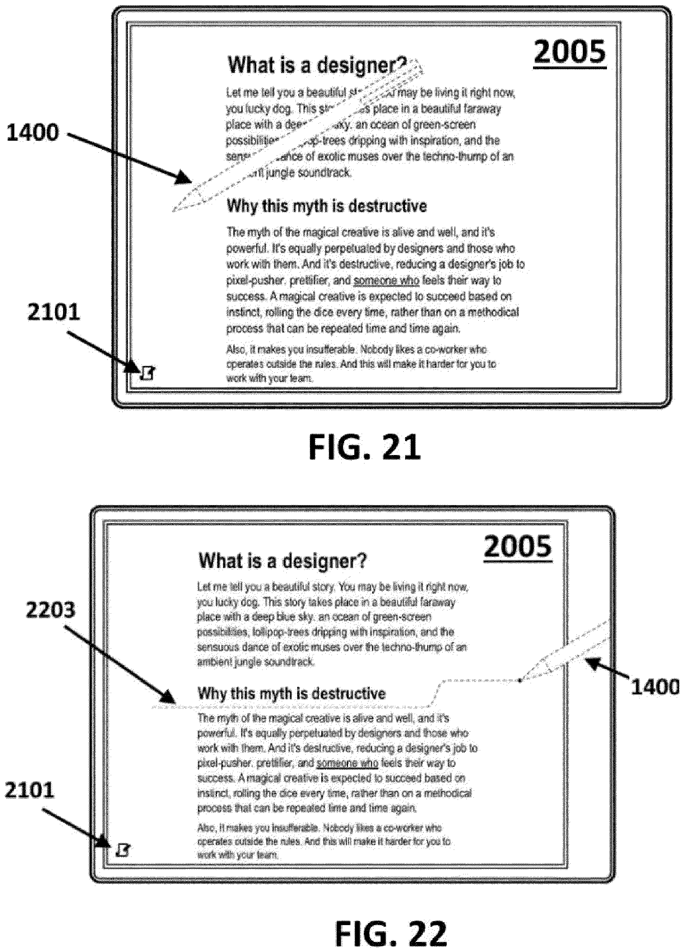

FIG. 21 illustrates the display 2005 in a Refine Mode, according to an embodiment of the invention. When Refine Mode is active, then a status icon 2101 may appear on the display screen 300 to indicate that the e-paper tablet device 110 is in the Refine mode and not the Creative Mode.

As discussed, the user may engage the pen-stylus 1400 to undertake the various tasks enabled by the Refine Mode. The Refine Mode allows users to comfortably and seamlessly refine content where typed and handwritten text have been combined. For example:
- Formatting/function shortcuts between Creative Mode and Refine Mode makes it easy for users to create a structure in the document and organize their thoughts, e.g., when a user is in a creative mood, the Creative Mode on the e-paper tablet device 110 supports the requisite creative activities, and when the user is in a mood to refine the creative output, the Refine Mode on the e-paper tablet device 110 supports the request refinement activities.

The Refine Mode aims to bring together the experience of handwriting, typing and creating lines closer together. For example, giving handwritten inputs via the pen-stylus 1400 "digital powers" of the e-paper tablet device 110 may even include functionality that allows users to search through their handwriting, and using handwritten text to complete input fields, such as notebook names, search fields, etc. Giving typed text the flexibility of lines explore the possibilities for adjusting and freely placing textboxes. The pen-stylus 1400 may be employed to select and rearrange text, move handwritten notes and drawings in the Refine Mode. The Refine Mode allows users to convert selected handwritten text to typed text and retain their layout. The Refine Mode may also support content clipping from PDF documents, such as text or images.

The Refine Mode enables an essentially limitless number of user commands and actions. The basic idea is that user inputs with the pen-stylus 1400 switch from drawing lines, text, and graphics on the display 2005 to selecting, re-arranging, changing, and editing the content, such as the text and/or handwritten notes. These operations may have previously been available to users via the user of something like a menu on the display 2005, but the Refine Mode allows these selections to occur directly and naturally with greatly reduced necessity from an intermediate middle step that involves a menu.

Refine Mode presents a 'state' where the user transitions from creating to reviewing / editing content. As discussed, the switch between these states may be triggered by the special function key 1205 on the keyboard 1201 associated with the e-paper tablet device 110 and/or by an onscreen menu key, such as when the keyboard 1201 is not present.

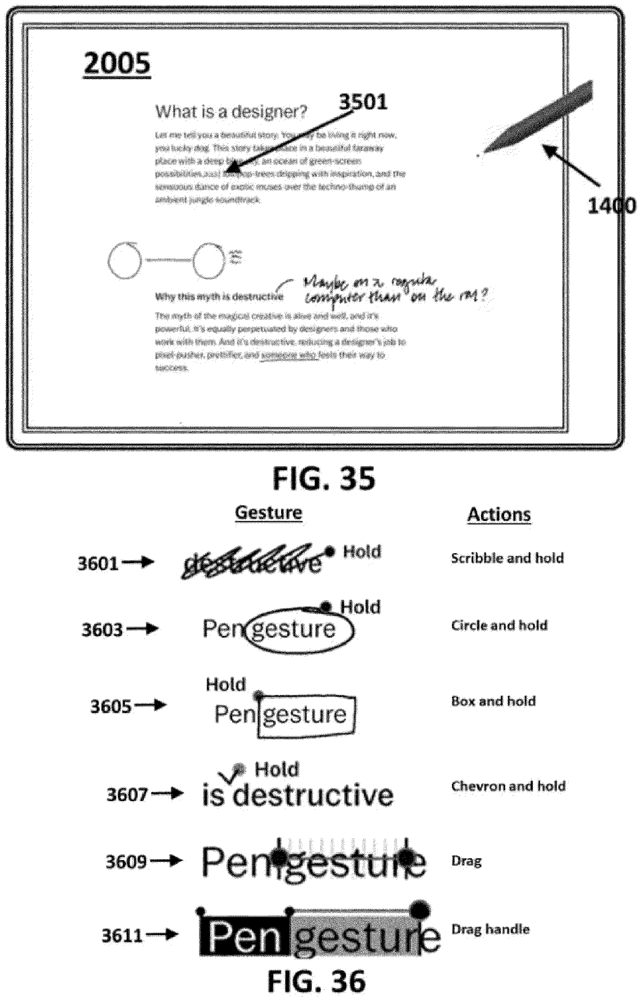

FIGs. 22-35 illustrate some of the actions that a user may take using the Refine Mode, according to an embodiment of the invention. However, additional functions may be engaged within the spirit of the Refine Mode, provided that such actions are within the capabilities of the hardware of the e-paper tablet device 110 and within the abilities of the anchoring module 270 and the refine module 280, for example, to effectively understand the intention of the gesture made by the user with the pen-stylus 1400. For example, FIG. 36 provides a list of gestures that could be implemented in the Refine Mode to further expands its capabilities.

FIGs. 22-24 illustrate a series of actions that a user may take in the Refine Mode to select a section of text, handwritten notes, and drawings on the display 2005, according to an embodiment of the invention.

FIG. 22 illustrates actions taken by a user with the pen-stylus 1400 to begin the process of selecting text, according to an embodiment of the invention. A user has drawn a line 2203, as shown in FIG. 22. If the user drew the line 2203 in the Creative Mode, then the line would become part of the document shown on the display 2005. When the user draws the line 2203 in the Refine Mode, then the line drawn does not become a part of the document on the display 2005. The line 2203 may be shown on the display 2005 in a color (e.g., blue) different than the text of the document shown in the display 2005. The anchor module 270 may help determine the location of the line 2203 in the document displayed in the display 2005.

As mentioned, the e-paper tablet device 110 might not be connected to a keyboard, and in such cases, then if the user uses the selection tool from a menu presented on the e-paper tablet device 110, then the behavior would be the same as the Refine Mode discussed immediately below. In short, users may erase, erase a section, select, etc. with the pen-stylus 1400 when the keyboard is not present, according to an embodiment of the invention.

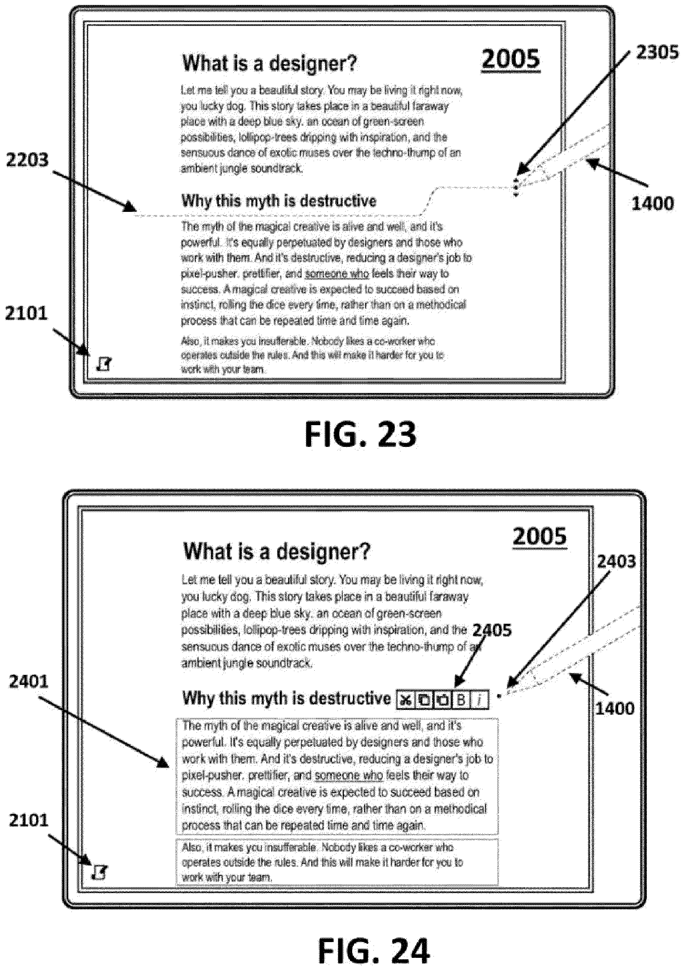

As shown in FIG. 23, after the user has drawn the line 2203 by holding the pen-stylus 1400 on the screen, then a marker 2305 comprised of an up marker (e.g., a triangle) and a down marker (e.g., a triangle) may appear on the display 2005, according to an embodiment of the invention. Again, since the user has selected the Refine Mode, the marker 2305 appears on the display 2005 but does not become part of the document displayed on the display 2005. The anchor module 270 may determine the location of the marker 2305 in the document displayed on the display 2005.

As shown in FIG. 24, the user has used the pen-stylus 1400 to indicate a location 2403 below the marker 2305 shown in FIG. 23 which has caused the e-paper tablet device 110 to select the portions 2401 of the document on the display 2005 below the marker 2305, according to an embodiment of the invention. The e-paper tablet device 110 may be configured to select all the portions of the document below the location 2403 or the all the portion of the document as shown on the display 2005 below the location 2403. The portions 2401 may be shown in highlight or some other similar indication, according to an embodiment of the invention.

The user's selection of the portion 2401 may also cause the Refine Mode to present a selection menu 2405. The selection menu may comprise commands such as cut, copy, paste, bold, and italic. If the user presses with the pen-stylus 1400 on one of these commands, then the requisite action will be taken on the selected portion 2401 (e.g., the selected portion could be cut, copied, pasted, turned into bold or presented in italic). Highlighting of the portion 2401 and/or an action taken with the selection menu 2405 will be enabled by the anchor module 270 acting together with the refine module 280. In other words, the anchor module 270 determines the portions of the document impacted by the refine module 280, and other software on the e-paper tablet device 110 may carry out any selected action with results in the underlying document and/or shown on the display 2005.

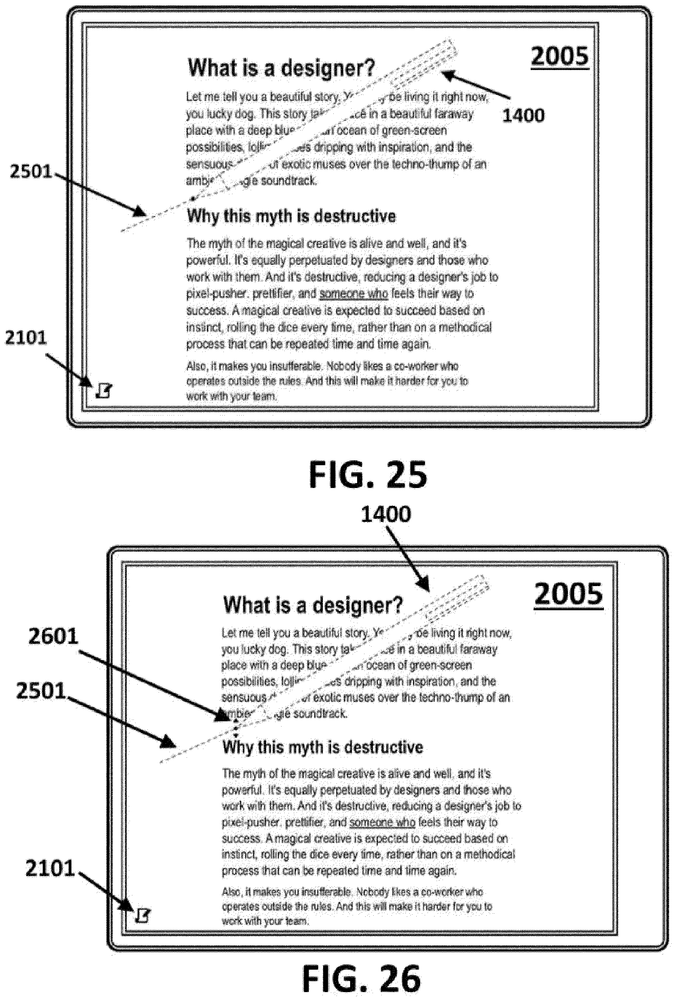

FIGs. 25-27 illustrates a series of actions that a user may take in the Refine Mode to select a section of text, handwritten notes, and drawings on the display 2005, according to another embodiment of the invention.

FIG. 25 illustrates actions taken by a user with the pen-stylus 1400 to begin the process of selecting text, according to an embodiment of the invention. A user has drawn a short line 2501 with the pen-stylus 1400, as shown in FIG. 25. If the user drew the line 2501 in the Creative Mode, then the line would become part of the text on the display 2005. When the user draws the line 2501 in the Refine Mode, then the line drawn does not become a part of the document shown in the display 2005. The line 2501 may be shown in a color (e.g., blue) different than the color of the document shown in the display 2005. The anchor module 270 may help determine the location of the line 2501 in the document displayed in the display 2005.

As shown in FIG. 26, after the user has drawn the line 2501, then a marker 2601 comprised of an up marker (e.g., a triangle) and a down marker (e.g., a triangle) may appear on the display 2005, according to an embodiment of the invention. Again, since the user has selected the Refine Mode, the marker 2601 appears on the display 2005 but does not become part of the document displayed on the display 2005. The anchor module 270 may determine the location of the marker 2601 in the document displayed on the display 2005.

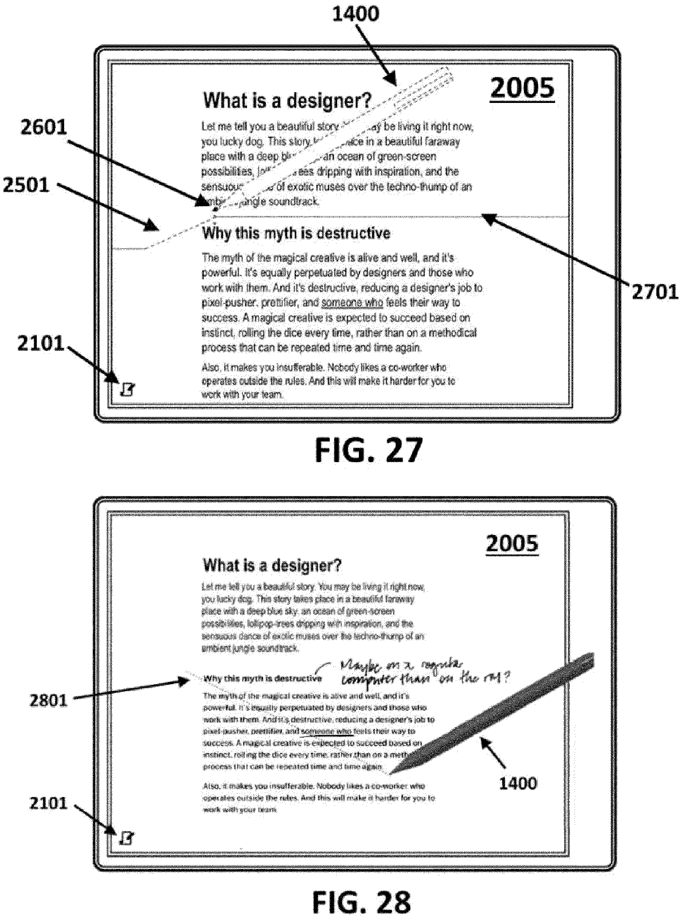

As shown in FIG. 27, the Refine Mode via the refine module 280 has extended another line 2701 beyond the end point of the line 2501 where the marker 2601 appears. If the user next uses the pen-stylus 1400 to select above or below the line comprised of segments 2501 and segments 2701, then portions of the document either above or below the line will be selected in a manner similar to that shown in FIG. 24.

Both embodiments of the invention shown in FIGs. 22-24 and FIGs. 25-27 allow users to avoid certain portions of a document on the display 2005 in making their selections, e.g., a user could select text but not related annotations or vice versa.

FIGs. 28-29 illustrate an embodiment of the Refine Mode used to edit a document on the display 2005, according to an embodiment of the invention.

As shown in FIG. 28, the user has employed the pen-stylus 1400 to draw a line 2801 across a paragraph of text shown on the display 2005. If the user drew the line 2801 in the Creative Mode, then the line 2801 would become part of the document shown on the display 2005. However, since the line 2801 represents a command in the Refine Mode, then the line 2801 does not become part of the document on the display 2005. The anchor module 270 working with the refine module 280 will determine which parts of the document shown on the display 2005 have been impacted by the line 2801. The line 2801 may be shown in a different color than the text shown on the display 2005, according to an embodiment of the invention.

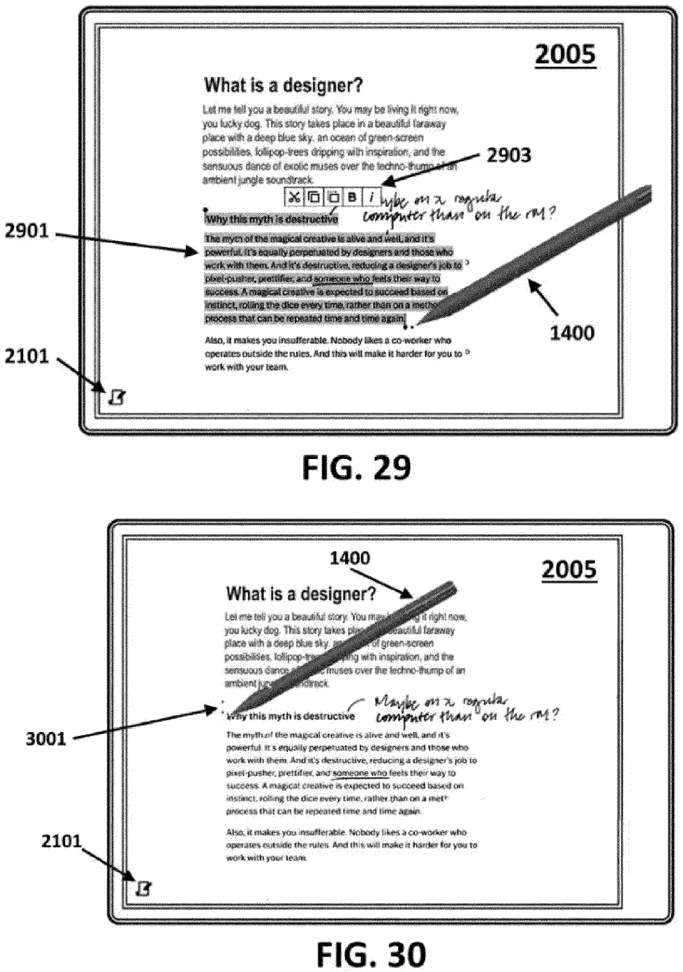

FIG. 29 illustrates that portions 2901 of the document associated with the line 2801 illustrated in FIG. 28 have become selected in the display 2005 due to the Refine Mode, according to an embodiment of the invention. The user's selection of the portion 2901 may also cause the Refine Mode to present a selection menu 2903. The selection menu may include commands such as cut, copy, paste, bold, and italic. If the user presses with the pen-stylus 1400 on one of these commands, then the action will be taken on the selected portion 2901 (e.g., the selected portion could be cut, copied, pasted, turned into bold or presented in italic) and result in a change to the document shown on the display 2005. Highlighting of the portion 2901 and/or an action taken with the selection menu 2903 will be enabled by the anchor module 270 working with the refine module 280. In other words, the anchor module 270 determines the portions of the document impacted by the refine module 280, and other software on the e-paper tablet device 110 may carry out any selected action within the document and on the display 2005.

FIGs. 30-31 illustrate application of the Refine Mode to create additional space in a document on the display 2005, according to an embodiment of the invention. A similar process may also be used to remove space in a document.

As shown in FIG. 30, the user has used the pen-stylus 1400 to tap a portion of the document shown on the display 2005 and then hold the pen-stylus on the display 2005, then move the pen-stylus 1400 down to create space between two paragraphs, for example. Similar to FIG. 26, this action has caused the Refine Mode to display a marker 3001. The marker 3001 may comprise an upper portion (e.g., a triangle) and a lower portion (e.g., a triangle). The user may next take an action (e.g., a tap) with the pen-stylus 1400 above or below the marker 3001.

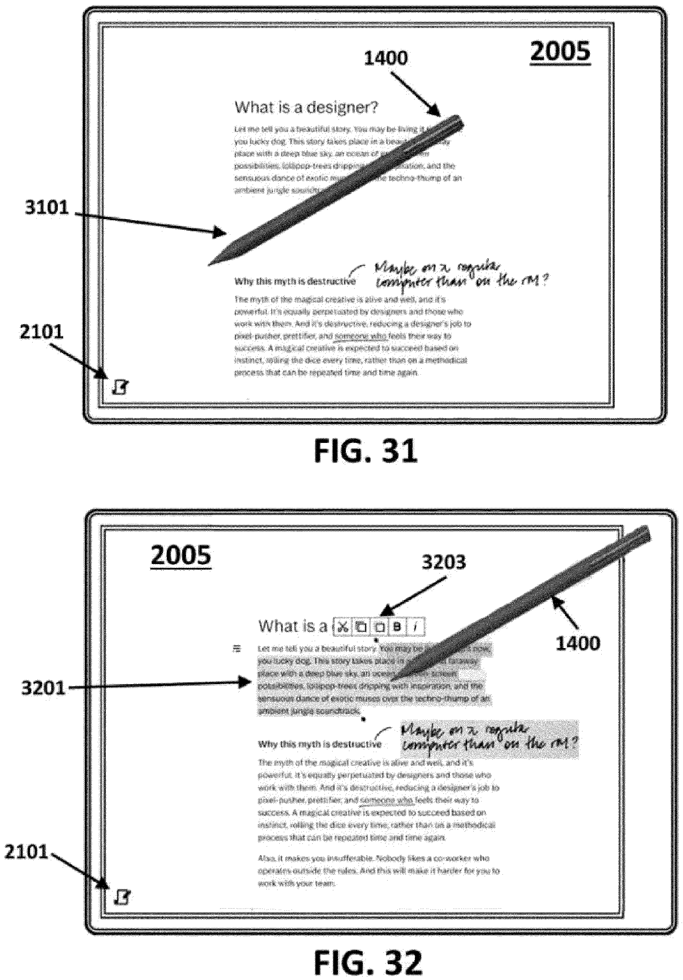

FIG. 31 illustrates additional space 3101 added to the document shown in the display 2005 by the user taking an action (e.g., a tap) with the pen-stylus 1400 below the marker 3001 shown in FIG. 30. The amount of space added by such actions could be predetermined and/or a variable setting within the refine module 280 on the e-paper tablet device 110. So, the user could switch to the Refine Mode to create space between the paragraphs, then switch back to the Creative Mode to continue creating Alternatively, the Creative Mode might also include an additional command in which the user may employ the pen-stylus to "stretch" the document above or below the marker 3001 by drawing an appropriate distance, according to an embodiment of the invention.

As mentioned, a similar procedure may be employed to remove space in a document.

FIGs. 32-33 illustrate a sequence of steps that a user may employ to move and/or rearrange portions of a document shown on the display 2005, according to an embodiment of the invention.

As shown in FIG. 32, the user has previously used the Refine Mode to select a particular section 3201 of the document shown on the display 2005. The particular section 3201 of the document selected comprises a portion of text and a handwritten annotation. The Refine Mode has caused this section to be shown in highlight, although the particular section 3201 could be indicated in another manner.

The user's selection of the particular section 3201 may also cause the Refine Mode to present a selection menu 3203. The selection menu may be commands such as cut, copy, paste, bold, and italic. If the user presses with the pen-stylus 1400 on one of these commands, then the action will be taken on the particular section 301 (e.g., the selected portion could be cut, copied, pasted, turned into bold or presented in italic). Highlighting of the particular section 3201 and/or an action taken with the selection menu 3201 will be enabled by the anchor module 270 working with the refine module 270. In other words, the anchor module 270 determines the portions of the document impacted by the refine module 270, and other software on the e-paper tablet device 110 may carry out any selected action.

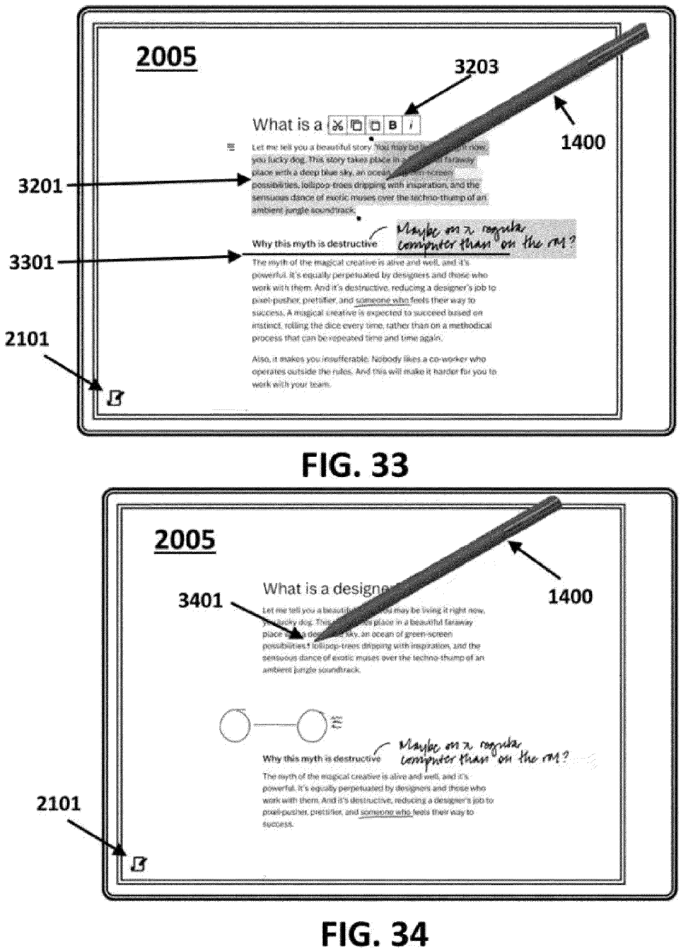

As shown in FIG. 33, a line 3301 appears on the display 2005 once the user starts dragging the selected section 3201 into other positions of the display 2005. The line 3301 may be automatically drawn to give the user feedback regarding where the selected section 3201 will be move to. Since the e-paper tablet device 110 is in the Refine Mode, the line 3301 may be shown on the display 2005 but does not become part of the document shown on the display 2005. In this embodiment of the Refine Mode, the user may next take an action, such as tapping within the selection 3201 that will cause the Refine Mode to move the selection 3201 to the location of the line 3301 as shown on both the display 2005 and in the document itself. For example, the tip of the pen-stylus 1400 may need to reside on top of the horizontal line under the line 'why this myth is destructive' as shown in FIG. 33. The anchor module 270 working with the refine module 280 enables such changes to the document, according to an embodiment of the invention.

FIGs. 34-35 illustrate a sequence of steps involving the Refine Mode that enable a user to edit a given document shown on a display 2005 by placing a caret in the text, according to an embodiment of the invention.

As shown in FIG. 34, in the Refine Mode, a user has made a small mark 3401 with the pen-stylus 1400 in a text shown on the display 2005. If the small mark 3401 had been made in the Creative Mode then a small mark would have been drawn on the display 2005 and added to the document on the display 2005. Since the e-paper tablet device 110 is in the Refine Mode, the small mark 3401 appears on the display 2005 but does not itself cause an alteration to the document on the display 2005. The Refine Mode may also cause a cursor to appear in conjunction with the small mark 3401.

FIG. 35 further illustrates the results of the caret inserted next to the small mark 3401 from FIG. 34 when the user switches to the Creative Mode and begins typing with the keyboard 1201 to add new text 3501 to the document displayed on the display 2005. The new text 3501 is added to the document displayed on the display 2005. The location of the new text is linked to an appropriate location in the document by anchoring module 270 working with the refine module 280.

FIG. 36 further illustrates gestures that a user may make with a pen-stylus 1400 in the Refine Mode to edit a document, according to an embodiment of the invention.

In a first gesture 3601 in the Refine Mode, the user scribbles out a block of text and then holds the pen-stylus in position. The Refine Mode may employ the gesture 3601 to accomplish a task such as deleting the text that has been scribbled out in the underlying document and on the display 2005.

In a second gesture 3603, in the Refine Mode, the user draws a circle around a textual element and holds the pen-stylus in position. The Refine Mode may use the gesture 3603 to select text in a document for a purpose such as highlighting, cut, copy, paste, move, drag, or even creating a hyperlink. The Refine Mode may ensure that such changes are made to the underlying document as well as on the display 2005.

In a third gesture 3605, the user draws a box around a textual element and holds the pen-stylus in position. The Refine Mode may use the gesture 3605 to perform tasks similar to the gesture 3603. An advantage of a gesture like the gesture 3605 is that the user does not need to interact with a toolbar and choose a task like highlighting from a selection menu.

In a fourth gesture 3607, the user adds a chevron or caret between two textual elements and holds the pen-stylus in position. The Refine Mode may use the gesture 3607 for tasks such as inserting a word in a document or opening an input field to write a word or two into the document, possibly with the pen-stylus 1400 in between existing pieces of text in the document.

In a fifth gesture 3609, the user makes a dot with the pen-stylus and draws a line to another dot which allows the now drawn-through text to be dragged. The Refine Mode may use the gesture 3609 for a variety of tasks, such as precisely moving a caret for application to further refinements.

In a sixth gesture 3611, the user makes a dot then draws a line down underneath and above a piece of text before making another line to the text, which allows the now surrounded text to be effectively lifted by the handle that the user has drawn. The Refine Mode may use the gesture 3611 for a variety of tasks such as precisely adjusting a selection within a document for further refinement.

The Refine Mode may enjoy new gestures being implemented over time using the same hardware set up in the e-paper tablet device 110. The Refine Mode can also include features such as spell check. As noted, using the e-paper tablet device 110 in Refine Mode, users can seamlessly change between, and creatively combine typed and handwritten notes. Refine Mode gives users the flexibility to organize, structure and better understand their thoughts. The e-paper tablet device 110 then becomes a device that further supports a user's own way of thinking.

### ADDITIONAL CONSIDERATIONS

It is to be understood that the figures and descriptions of the present disclosure have been simplified to illustrate elements that are relevant for a clear understanding of the present. disclosure, while eliminating, for the purpose of clarity, many other elements found in a typical system. Those of ordinary skill in the art may recognize that other elements and/or steps are desirable and/or required in implementing the present disclosure. However, because such elements and steps are well known in the art, and because they do not facilitate a better understanding of the present disclosure, a discussion of such elements and steps is not provided herein. The disclosure herein is directed to all such variations and modifications to such elements and methods known to those skilled in the art.

Some portions of present disclosure describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as engines, without loss of generality. The described operations and their associated engines may be embodied in software, firmware, hardware, or any combinations thereof.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Where values are described as "approximate" or "substantially" (or their derivatives), such values should be construed as accurate +/- 10% unless another meaning is apparent from the context. From example, "approximately ten" should be understood to mean "in a range from nine to eleven."

As used herein, the terms "comprises," "comprising," "includes," "including," "has," "having" or any other variation thereof are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

While particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the spirit and scope of the disclosure.

## Claims

1. A computerized annotation system, comprising:
a computer memory;
a display screen configured to display a document having text characters, wherein the text characters have an underlying document representation stored in the computer memory such that each text character in the document has a unique identifier;
an input detector module configured to receive a first annotation to the document displayed on the display screen, wherein the first annotation comprises graphic data produceable by interaction between the display screen and an input mechanism, wherein the input detector module is further configured to initiate an update to the display screen to show both the document and the first annotation; and
a refine module configured to determine whether the computerized annotation system is in one of a creative mode or a refine mode, and wherein the refine module is further configured to initiate storage in the computer memory of an update to the document that includes the first annotation if the computerized annotation system is in the creative mode and initiate a refinement to the document if the computerized annotation system is in the refine mode.

2. The computerized annotation system of claim 1, wherein the refine module is further configured to determine whether the computerized annotation system is in one of the creative mode or the refine mode based on a state of a special key on a keyboard electronically connected to the computerized annotation system.

3. The computerized annotation system of claim 1, wherein the refine module is further configured to initiate the refinement to the document upon receipt of the first annotation by the input detector module.

4. The computerized annotation system of claim 3, wherein the input detector module is further configured to receive additional annotations in the refine mode and determine the refinement to be made to the document based on the first annotation and at least one annotation of the additional annotations.

5. The computerized annotation system of claim 4, wherein the refine module is further configured to determine that the refinement to the document in the refine mode comprises one of moving contents in the document to another location in the document, editing text in the document, deleting text in the document, creating additional space in the document, removing space in the document, and changing format characteristics of the document.

6. The computerized annotation system of claim 5, wherein the first annotation comprises a line drawn across the document from a first side to a second side, wherein the refine module is further configured to direct the display screen to project an indicator proximally located near the line on the display, wherein the input detector module is further configured to receive a second annotation that comprises a tap to the display from the input mechanism, and wherein the refine mode is further configured to direct the display to select contents of the document shown on the display based on the tap location.

7. The computerized annotation system of claim 1 wherein the input mechanism is a pen-stylus electronically connected to the computerized annotation system.

8. The computerized annotation system of claim 1, further comprising an anchor module configured to:
calculate a center for the first annotation;
determine a text character in the document whose presentation on the display screen lies in closest proximity to the determined first annotation center; and
store a link between the unique identifier of the determined text character and the first annotation in the computer memory, wherein the link is an anchor point for the first annotation and the document such that display of the first annotation with the determined text character remain linked in future displays of the document.

9. The computerized annotation system of claim 8 wherein the anchor module is further configured to calculate the center for the first annotation by calculating a weighted center for the first annotation, such that portions of the first annotation closer to the document on the display screen receive higher weight in determining the center for the first annotation.

10. The computerized annotation system of claim 8, wherein the input detector module is further configured to:
change a position of one or more text characters in the document on the display screen to accommodate the edit, the determined text character being one of the one or more text characters changing positions on the display screen; and
change a position of the annotation based on the position change of the determined text character.

11. A method for being carried out by a computerized annotation system, comprising:
retrieving a document having text characters from a computer memory of the computerized annotation system for display on a display screen of the computerized annotation system, wherein the text characters have an underlying document representation stored in the computer memory such that each text character in the document has a unique identifier;
receiving a first annotation to the document displayed on the display screen, wherein the first annotation comprises graphic data produced by interaction between the display screen and an input mechanism;
updating the display screen to show both the document and the first annotation;
determining if the computerized annotation system is in one of a creative mode or a refine mode;
storing the first annotation in the computer memory and altering the document if the computerized annotation system is determined to be in a creative mode; and
initiating a refinement to the document if the computerized annotation system is determined to be in a refine mode.

12. The method of claim 11, further comprising:
receiving an electronic input from a special key on a keyboard electronically connected to the computerized annotation system, wherein the electronic input determines if the computerized annotation system is in one of a creative mode or a refine mode.

13. The method of claim 11, wherein the computerized annotation system is determined to be in a refine mode, the method further comprising:
receiving a second annotation to the document displayed on the display screen, wherein the second annotation comprises graphic data produced by interaction between the display screen and an input mechanism;
determining the refinement to the document based on the first annotation and the second annotation.

14. The method of claim 11, wherein the first annotation comprises a line drawn across the document from a first side to a second side, the method further comprising:
displaying on the display screen an indicator proximally located near the line;
receiving a second annotation that comprises a tap to the display from an input mechanism; and
selecting contents of the document shown on the display based on a location of the second annotation on the display.

15. The method of claim 11 wherein the document displayed on the display screen is encoded in a conflict-free replicated data type (CRDT) data structure in the computer memory.
